(19) Europäisches Patentamt
European Patent Office
Office européen des brevets

(11) **EP 4 683 088 A1**

(12) **EUROPEAN PATENT APPLICATION**
published in accordance with Art. 153(4) EPC

(43) Date of publication:
**21.01.2026 Bulletin 2026/04**

(21) Application number: 24770931.4

(22) Date of filing: **13.03.2024**

(51) International Patent Classification (IPC):
*H01M 50/417 (2021.01)*    *H01G 11/06 (2013.01)*
*H01G 11/52 (2013.01)*    *H01M 4/58 (2010.01)*
*H01M 10/052 (2010.01)*    *H01M 50/403 (2021.01)*
*H01M 50/406 (2021.01)*    *H01M 50/449 (2021.01)*
*H01M 50/457 (2021.01)*    *H01M 50/489 (2021.01)*
*H01M 50/491 (2021.01)*    *H01M 50/494 (2021.01)*

(52) Cooperative Patent Classification (CPC):
**H01G 11/06; H01G 11/52; H01M 4/58;**
**H01M 10/052; H01M 50/403; H01M 50/406;**
**H01M 50/417; H01M 50/449; H01M 50/457;**
**H01M 50/489; H01M 50/491; H01M 50/494;**
**Y02E 60/10**

(86) International application number:
**PCT/JP2024/009786**

(87) International publication number:
**WO 2024/190826 (19.09.2024 Gazette 2024/38)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **16.03.2023 JP 2023042151**
**28.03.2023 JP 2023052230**

(71) Applicant: **Asahi Kasei Kabushiki Kaisha**
**Tokyo 1000006 (JP)**

(72) Inventors:
• **UCHIDA, Kazunori**
**Tokyo 100-0006 (JP)**
• **SAITO, Shun**
**Tokyo 100-0006 (JP)**

(74) Representative: **Strehl & Partner mbB**
**Maximilianstrasse 54**
**80538 München (DE)**

(54) **SEPARATOR FOR POWER STORAGE DEVICE, AND POWER STORAGE DEVICE**

(57)    The present disclosure provides a separator for a power storage device, which is excellent in terms of at least one of suppression of dendrite short-circuiting, low resistance and high piercing strength. This separator for a power storage device comprises a separator substrate having: one or more microporous layers (A) comprising mainly polypropylene; and one or more microporous layers (B) which comprise mainly polypropylene and which are layered on at least one of the microporous layers (A). The melt tension $Mt_A$ of the microporous layer (A) at 240°C is 10-40 mN. The ratio of the melt tension $Mt_A$ of the microporous layer (A) at 240°C and the melt tension $Mt_B$ of the microporous layer (B) at 240°C ($Mt_A/Mt_B$) is 1.05-4.0. The area-average long pore diameter of the microporous layer (A) is 50-500 nm.

Fig. 1

**Description**

FIELD

The present disclosure relates to a separator for a power storage device.

BACKGROUND

Microporous membranes, particularly polyolefin-based microporous membranes, are used in various fields such as precision filtration membranes, separators for batteries, separators for capacitors, and materials for fuel cells and are particularly used as separators for power storage devices represented by lithium secondary batteries and lithium-ion secondary batteries. Lithium-ion batteries are applied to various uses, such as electric vehicles including hybrid vehicles and plug-in hybrid vehicles in addition to small-sized electronic equipment including mobile phones and notebook personal computers.

In recent years, there has been a demand for lithium-ion batteries having high energy capacity, high energy density, and excellent output characteristics, which is leading to a growing demand for separators that are thin membranes and excel in battery performance, battery reliability, and safety.

For example, PTL 1 describes a multilayer microporous thin membrane or membrane that may improve characteristics including dielectric breakdown and strength. A preferable multilayer microporous membrane includes a micro layer and one or more multilayer barriers.

PTL 2 describes a separator for a power storage device, the separator comprising a microporous membrane and having a polyolefin as a main component, melt tension measured at a temperature of 230°C being 30 mN or less, and a melt flow rate (MFR) measured at a temperature 230°C under a load of 2.16 kg being 0.9 g/10 min or less.

[CITATION LIST]

[PATENT LITERATURE]

[PTL 1] International Application Publication No. WO 2018/089748
[PTL 2] International Application Publication No. WO 2020/196120

SUMMARY

[TECHNICAL PROBLEM]

An object of the present disclosure is to provide a separator for a power storage device, the separator excelling in at least one of dendrite short circuiting suppression, low resistance, and high puncture strength.

[SOLUTION TO PROBLEM]

Examples of an embodiment of the present disclosure will be listed below in Items [1] to [15].

[1] A separator for a power storage device, the separator comprising a separator substrate comprising one or a plurality of microporous layers (A) having polypropylene as a main component and one or a plurality of microporous layers (B) having polypropylene as a main component and being stacked on at least one of the microporous layers (A),

wherein the microporous layer (A) has a melt tension $Mt_A$ at 240°C of 10 mN or greater and 40 mN or less,
a ratio $Mt_A/Mt_B$ between the melt tension $Mt_A$ of the microporous layer (A) at 240°C and a melt tension $Mt_B$ of the microporous layer (B) at 240°C is 1.05 or greater and 4.0 or less, and
the microporous layer (A) has an area-average major axis pore diameter of 50 nm or greater and 500 nm or less.

[2] The separator for a power storage device according to Item 1, wherein a ratio $Mt_A/Mt_B$ between the melt tension $Mt_A$ of the microporous layer (A) at 240°C and the melt tension $Mt_B$ of the microporous layer (B) at 240°C is 1.1 or greater and 2.2 or less.
[3] The separator for a power storage device according to Item 1 or 2, wherein the separator for a power storage device has an MD tensile strength of 2000 kgf/cm$^2$ or greater and 2800 kgf/cm$^2$ or less.

[4] The separator for a power storage device according to any one of Items 1 to 3, wherein a thermal contraction rate in a width direction after performing a heat treatment on the separator substrate at 150°C for 1 hour is -1.0% or greater and 3.0% or less.

[5] The separator for a power storage device according to any one of Items 1 to 4, wherein at least one of the microporous layers (A) is adjacent to at least one of the microporous layers (B).

[6] The separator for a power storage device according to any one of Items 1 to 5, wherein the separator substrate includes the microporous layer (A) in outermost layers on both sides.

[7] The separator for a power storage device according to any one of Items 1 to 6, wherein the microporous layer (A) has a thickness of 5 $\mu$m or less, and the microporous layer (B) has a thickness of 5 $\mu$m or less.

[8] The separator for a power storage device according to any one of Items 1 to 7, wherein the separator for a power storage device has a porosity of 40% or greater and 60% or less.

[9] The separator for a power storage device according to any one of Items 1 to 8, wherein the separator for a power storage device has an air permeability of 10 sec/100 cc or greater and less than 220 sec/100 cc.

[10] The separator for a power storage device according to any one of Items 1 to 9, wherein the microporous layer (B) has an area-average major axis pore diameter of 50 nm or greater and 240 nm or less.

[11] The separator for a power storage device according to any one of Items 1 to 10, wherein the separator for a power storage device has an MD/TD tensile strength ratio of 16 or greater and 30 or less.

[12] A power storage device comprising a positive electrode, a negative electrode, and the separator for a power storage device according to any one of Items 1 to 11, the separator being placed between the positive electrode and the negative electrode.

[13] The power storage device according to Item 12, in which the positive electrode contains lithium iron phosphate as a positive electrode active material.

[14] A method for manufacturing a separator for a power storage device, the separator comprising a separator substrate comprising one or a plurality of microporous layers (A) having polypropylene as a main component and one or a plurality of microporous layers (B) having polypropylene as a main component, the method comprising:

a melt extrusion process in which a precursor sheet of the separator substrate is produced by (i) forming the microporous layer (A) and the microporous layer (B) by coextrusion or (ii) separately forming the microporous layer (A) and the microporous layer (B) by extrusion and then laminating the layers;
a process of performing an annealing treatment on the acquired precursor sheet within a temperature range from 135°C or higher to 160°C or lower;
a process of performing cold stretching on the precursor sheet in an MD at an elongation ratio equal to or greater than 5% and equal to or less than 20%; and
a process of performing hot stretching and thermal relaxation on the precursor sheet.

[15] The method according to Item 14, in which the hot stretching and the thermal relaxation stretch a dimension of the precursor sheet in an MD to 140% or greater and 220% or less and subsequently relax the dimension in an MD to 10% or greater and 50% or less assuming the dimension before stretching to be 100%.

[ADVANTAGEOUS EFFECTS OF INVENTION]

According to the present disclosure, a separator for a power storage device, the separator excelling in at least one of dendrite short circuiting suppression, low resistance, and high puncture strength, can be provided.

BRIEF DESCRIPTION OF DRAWINGS

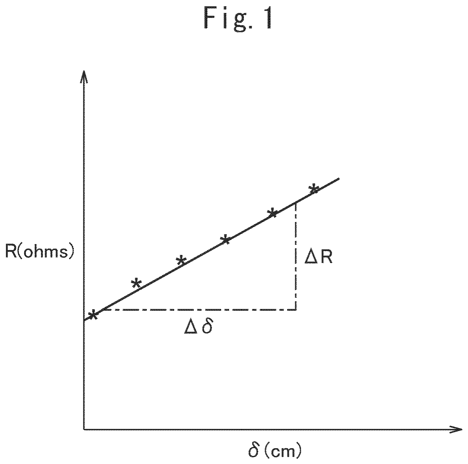

FIG. 1 is a diagram defining $\Delta R$ and $\Delta \delta$ for evaluating the membrane resistance value of a microporous membrane.

DESCRIPTION OF EMBODIMENTS

<<Separator for Power Storage Device>>

A separator for a power storage device according to the present disclosure includes a separator substrate comprising one or a plurality of microporous layers (A) having polypropylene as a main component, and one or a plurality of microporous layers (B) having polypropylene as a main component and being stacked on at least one of the microporous layers (A). The separator substrate may further include a coating layer (also referred to as a "surface layer" or a "covering layer," and hereinafter simply referred to as a "coating layer") on the microporous layers (A) and/or the microporous layers (B). Herein, a "microporous layer" refers to each microporous layer constituting a substrate of a separator, a "separator substrate" refers to the substrate of the separator excluding an optional coating layer, and a "separator" refers to the entire separator comprising the optional coating layer, if any.

<Microporous Layer (A)>

The separator for a power storage device according to the present disclosure includes the microporous layer (A). The separator for a power storage device may include only one microporous layer (A) or two or more microporous layers (A). The microporous layer (A) has polypropylene as a main component, which allows maintenance of excellent battery performance even after storage at a high temperature (e.g., 130°C). Having polypropylene as a "main component" herein means that polypropylene accounts for the largest weight percentage on the basis of the total weight of the microporous layer (A). The lower limit of the polypropylene content in the microporous layer (A) is preferably 50 wt.% or greater, more preferably 60 wt.% or greater, yet more preferably 75 wt.% or greater, 80 wt.% or greater, 90 wt.% or greater, 95 wt.% or greater, 97 wt.% or greater, or 99 wt.% or greater from the viewpoint of wettability, thin membrane formation, shutdown characteristics, and the like of the separator. The upper limit of the polypropylene content in the microporous layer (A) is not limited but may be, for example, 60 wt.% or less, 70 wt.% or less, 80 wt.% or less, 90 wt.% or less, 95 wt.% or less, 98 wt.% or less, or 99 wt.% or less and may also be 100 wt.%. When the microporous layer (A) is used as an outermost layer, the polypropylene content is preferably 97% or greater. Consequently, contamination of manufacturing equipment due to impurity bleed-out and manufacturing troubles due to poor separation between separators can be suppressed, and therefore, an annealing treatment can be performed on the separator substrate at a higher temperature. For example, an annealing treatment can be performed on the separator substrate at 135°C or higher; and as a result, a separator substrate with high permeability and high porosity tends to be acquired, which facilitates acquisition of a separator with low resistance.

<Material of Microporous Layer (A)>

The microporous layer (A) has polypropylene as a main component. Polypropylene in the microporous layer (A) may be the same material as polypropylene in the microporous layer (B) to be described later or may be polypropylene with a different chemical structure, or more specifically, polypropylene differing in at least one of a monomer composition, stereoregularity, a molecular weight, and a crystal structure. Examples of the stereoregularity of polypropylene include, but not limited to, atactic, isotactic, and syndiotactic homopolymers. Polypropylene according to the present disclosure is preferably an isotactic or syndiotactic high-crystallinity homopolymer.

Polypropylene in the microporous layer (A) is preferably a homopolymer and may be a copolymer co-polymerized with a small amount of comonomer other than propylene, such as an $\alpha$-olefin comonomer, examples of such a copolymer including a block polymer. For example, the amount of propylene structural units contained as repeating units in polypropylene may be, but not limited to, 70 mol% or greater, 80 mol% or greater, 90 mol% or greater, 95 mol% or greater, or 99 mol% or greater. For example, the amount of repeating units contained in polypropylene, the units being derived from a comonomer other than the propylene structure may be, but not limited to, 30 mol% or less, 20 mol% or less, 10 mol% or less, 5 mol% or less, or 1 mol% or less. One type of polypropylene may be used singly, or a mixture of two or more types may be used.

The weight average molecular weight (Mw) of polypropylene in the microporous layer (A) is preferably 300,000 or greater from the viewpoint of the strength and the like of the microporous layer and the viewpoint of dendrite suppression and is preferably 1,300,000 or less from the viewpoint of guaranteeing excellent membrane formability and productivity. Mw of polypropylene is more preferably 500,000 or greater and 1,200,000 or less, yet more preferably 650,000 or greater and 1,100,000 or less, further more preferably 750,000 or greater and 1,000,000 or less, and particularly preferably 800,000 or greater and 1,000,000 or less.

The upper limit of a value (Mw/Mn) acquired by dividing the weight average molecular weight (Mw) of polypropylene in the microporous layer (A) by the number average molecular weight (Mn) is preferably 20 or less, more preferably 18 or less, 16 or less, 14 or less, or 12 or less. By setting Mw/Mn to 20 or less, excellent membrane formability and productivity tend to be guaranteed. Further, Mw/Mn is preferably 3 or greater and more preferably 4 or greater, 4.5 or greater, or 5.0 or greater. As the value of Mw/Mn of polypropylene increases, the melt tension of the acquired microporous layer also tends to increase; and therefore, increasing the melt tension of the microporous layer (A) is also preferable for dendrite suppression. Accordingly, the value of Mw/Mn of polypropylene being 3 or greater is preferable for controlling the melt tension of the microporous layer (A) to be high. Note that the weight average molecular weight, the number average molecular weight, and Mw/Mn of polyolefin according to the present disclosure are molecular weights in terms of polystyrene, the weights being acquired by gel permeation chromatography (GPC) measurement.

The density of polypropylene in the microporous layer (A) may be preferably 0.85 $g/cm^3$ or higher, such as 0.88 $g/cm^3$ or higher, 0.89 $g/cm^3$ or higher, or 0.90 $g/cm^3$ or higher. The density of polypropylene may be preferably 1.1 $g/cm^3$ or

less, such as 1.0 $g/cm^3$ or less, 0.98 $g/cm^3$ or less, 0.97 $g/cm^3$ or less, 0.96 $g/cm^3$ or less, 0.95 $g/cm^3$ or less, 0.94 $g/cm^3$ or less, 0.93 $g/cm^3$ or less, or 0.92 $g/cm^3$ or less. The density of polyolefin is related to the crystallinity of polypropylene; and by setting the density of polypropylene to 0.85 $g/cm^3$ or higher, the productivity of microporous layer production is improved, which is particularly advantageous in the dry method.

As long as the microporous layer (A) has polypropylene as a main component, the layer may contain another resin. Examples of another resin include a polyolefin other than polypropylene (also referred to as "another polyolefin") and a copolymer of polystyrene and a polyolefin. A polyolefin is a polymer containing a monomer with a carbon-carbon double bond as a repeating unit. Examples of a monomer constituting a polyolefin other than polypropylene include, but not limited to, monomers having carbon-carbon double bonds and two or four to ten carbon atoms, such as ethylene, 1-butene, 4-methyl-1-pentene, 1-hexene, and 1-octene. Examples of a polyolefin include a homopolymer, a copolymer, and a multistage polymer; and, as an example, a polyolefin may contain polyethylene. Preferable examples of a copolymer of polystyrene and a polyolefin include a styrene-(ethylene-propylene)-styrene copolymer (SEPS), a styrene-(ethylene-butene)-styrene copolymer, and a styrene-ethylene-styrene copolymer. A particularly preferable example is a styrene-(ethylene-propylene)-styrene copolymer (SEPS).

<Melt Flow Rate (MFR) of Microporous Layer (A)>

The upper limit of the melt flow rate (MFR) of the microporous layer (A) (the MFR of a single layer) is preferably 4.0 g/10 min or less and may be 3.0 g/10 min or less, 2.0 g/10 min or less, 1.5 g/10 min or less, 1.1 g/10 min or less, or 0.5 g/10 min or less from the viewpoint of acquiring a microporous layer (A) with higher strength and the viewpoint of dendrite short circuiting suppression. For example, the lower limit of the MFR of the microporous layer (A) (the MFR of a single layer) may be, but not limited to, 0.2 g/10 min or greater, 0.25 g/10 min or greater, 0.3 g/10 min or greater, or 0.35 g/10 min or greater from the viewpoint of moldability of the microporous layer (A), and the like. The MFR of the microporous layer (A) is measured under conditions of a load of 2.16 kg and a temperature of 230°C. The MFR of the microporous layer (A) being 4.0 g/10 min or less means that the molecular weight of polyolefin contained in the microporous layer (A) is to some extent high. The number of tie molecules binding crystalline materials to each other increases due to a high molecular weight of polyolefin, and therefore, a microporous layer (A) with high strength tends to be acquired, and sufficiently high melt tension can be applied, which tends to facilitate provision of a pore structure suppressing dendrite short circuiting. The MFR of the microporous layer (A) being 0.2 g/10 min or greater prevents the melt tension of the microporous layer (A) from becoming excessively high, which can guarantee excellent membrane formability and productivity. The MFR of polypropylene in the microporous layer (A) is preferably 0.2 to 4.0 g/10 min when measured under conditions of a load of 2.16 kg and a temperature of 230°C from the viewpoint of acquiring a microporous layer (A) with high strength and high melt tension. For example, the upper limit of the MFR of polypropylene may be 4.0 g/10 min or less, 3.0 g/10 min or less, 2.0 g/10 min or less, 1.5 g/10 min or less, 1.1 g/10 min or less, or 0.5 g/10 min or less from the viewpoint of acquiring a microporous layer with higher strength. For example, the lower limit of the MFR of polypropylene may be, but not limited to, 0.2 g/10 min or greater, 0.25 g/10 min or greater, 0.3 g/10 min or greater, or 0.35 g/10 min or greater from the viewpoint of the moldability of the microporous layer (A), and the like.

<Pentad Fraction of Microporous Layer (A)>

The lower limit of the pentad fraction of polypropylene in the microporous layer (A) may be preferably 94.0% or greater, such as 95.0% or greater, 96.0% or greater, 96.5% or greater, 97.0% or greater, 97.5% or greater, 98.0% or greater, 98.5% or greater, or 99.0% or greater, from the viewpoint of acquiring a microporous layer with low air permeability. The upper limit of the pentad fraction of polypropylene may be, but not limited to, 99.9% or less, 99.8% or less, or 99.5% or less. The pentad fraction of polypropylene is measured by using $^{13}C$-nuclear magnetic resonance (NMR).

The pentad fraction of polypropylene being 94.0% or greater indicates high crystallinity of polypropylene. A separator acquired by the stretching-induced pore formation method, particularly the dry method, has pores formed by stretching an amorphous part between crystalline materials; and therefore, when the crystallinity of polypropylene is high, the porous nature is improved, and the air permeability can be kept low, which enables higher battery output.

<Melt Tension of Microporous Layer (A)>

The melt tension $Mt_A$ of the microporous layer (A) at 240°C is 10 mN or greater and 40 mN or less. The lower limit of the melt tension $Mt_A$ is preferably 13 mN or greater, more preferably 16 mN or greater, yet more preferably 20 mN or greater, and particularly preferably 23 mN or greater from the viewpoint of exhibiting excellent dendrite suppression performance by providing a sufficiently fine pore structure and a small pore diameter. The upper limit of the melt tension $Mt_A$ is preferably 40 mN or less, more preferably 37 mN or less, yet more preferably 34 mN or less, and most preferably 32 mN or less from the viewpoint of excellent membrane formability and productivity.

<Area-average Major Axis Pore Diameter of Microporous Layer (A)>

The area-average major axis pore diameter of the microporous layer (A) on an ND-MD cross-section (hereinafter simply referred to as the "area-average major axis pore diameter") is 50 nm or greater and 500 nm or less; and the area-average major axis pore diameter of the microporous layer (A) is preferably smaller than the area-average major axis pore diameter of the microporous layer (B) and is 50 nm or greater and 500 nm or less. "ND" herein refers to the thickness direction of the microporous layer, and "MD" refers to the membrane formation direction of the microporous layer. For example, the MD of a separator comprising a microporous layer is the longitudinal direction when the separator is in a roll. A "major axis pore diameter" refers to a pore diameter in the MD. When there are two or more microporous layers (A) and/or microporous layers (B), the area-average major axis pore diameter of the microporous layer (A) is compared with the area-average major axis pore diameter of the microporous layer (B), based on the average area-average major axis pore diameter of the layers. The lower limit of the area-average pore diameter of the microporous layer (A) is preferably 50 nm or greater, more preferably 80 nm or greater, yet more preferably 100 nm or greater, yet further preferably 130 nm or greater, and particularly preferably 150 nm or greater from the viewpoint of guaranteeing excellent output, i.e., low membrane resistance in the power storage device. It is considered that a larger pore diameter leads to a shortened conductive path for Li ions, which makes lower membrane resistance more easily achieved. The upper limit of the area-average pore diameter of the microporous layer (A) is preferably 500 nm or less, preferably 400 nm or less, more preferably 300 nm or less, yet more preferably 250 nm or less, further more preferably 220 nm or less, and particularly preferably 350 nm or less from the viewpoint of excellent puncture resistance or dendrite short circuiting suppression. As the pore diameter decreases, the number of molecules connecting lamellar crystals (tie molecules) increases, and therefore, a separator with high puncture resistance tends to be acquired.

The area-average major axis pore diameter can be measured by performing cross-sectional SEM observation on an MD-ND cross-section of the separator and performing image analysis on the acquired image within a range of 20 $\mu$m in the MD $\times$ 3 $\mu$m in the ND. Detailed conditions will be described in Examples. Note that when the average pore diameter is measured from a cross-sectional SEM image, the number-average pore diameter and the area-average pore diameter can be calculated; however, the area-average pore diameter is herein used as the average pore diameter in order to acquire a better correlation with properties of the separator.

<Porosity of Microporous Layer (A)>

The porosity of the microporous layer (A) is preferably 40% or greater from the viewpoint of avoiding clogging in the power storage device and the viewpoint of acquiring low membrane resistance of the separator and is preferably 70% or less from the viewpoint of maintaining the strength of the separator and high puncture strength. The porosity of the microporous layer (A) is more preferably 45% or greater and 65% or less, yet more preferably 47% or greater and 60% or less, and particularly preferably 50% or greater and 57% or less from the viewpoint of low membrane resistance.

<Thickness of Microporous Layer (A)>

The thickness of the microporous layer (A) may be preferably 10 $\mu$m or less, such as 8 $\mu$m or less, 7 $\mu$m or less, 6 $\mu$m or less, 5 $\mu$m or less, 4.5 $\mu$m or less, or 4 $\mu$m or less, from the viewpoint of energy densification in the power storage device. The lower limit of the thickness of the microporous layer (A) may be preferably 1 $\mu$m or greater, such as 2 $\mu$m or greater, 3 $\mu$m or greater, or 3.5 $\mu$m or greater, from the viewpoint of strength and the like.

<Additive in Microporous Layer (A)>

The microporous layer (A) having polypropylene as a main component may further contain an additive, such as an elastomer, a crystallization nucleating agent, an antioxidant, and/or a filler as needed, in addition to polypropylene. The amount of the additive is not particularly limited but may be, for example, 0.01 wt.% or greater, 0.1 wt.% or greater, or 1 wt.% or greater, and 20 wt.% or less, 10 wt.% or less, or 7 wt.% or less, on the basis of the total weight of the microporous layer (A).

<Microporous Layer (B)>

The separator for a power storage device according to the present disclosure includes the microporous layer (B). The separator for a power storage device may include only one microporous layer (B) or two or more microporous layers (B). At least one of the microporous layers (B) preferably constitutes an outermost layer on at least one side of the separator substrate. When the separator for a power storage device includes two or more microporous layers (A), the microporous layers (B) may constitute the outermost layers on both sides of the separator substrate. Inclusion of polypropylene with low melt tension facilitates acquisition of a large pore diameter, and improved cycle performance and the like can be expected. The microporous layer (B) also has polypropylene as a main component, which allows maintenance of excellent battery performance even after storage at a high temperature (e.g., 130°C). Having polypropylene as a "main component" herein means that polypropylene accounts for the largest weight percentage on the basis of the total weight of the microporous layer (B). The lower limit of the polypropylene content in the microporous layer (B) is preferably 50 wt.% or greater, more preferably 60 wt.% or greater, yet more preferably 75 wt.% or greater, 80 wt.% or greater, 90 wt.% or greater, 95 wt.% or greater, 97 wt.% or greater, or 99 wt.% or greater from the viewpoint of wettability, thin membrane formation, shutdown characteristics, and the like of the separator. The upper limit of the polypropylene content in the microporous layer (A) is not limited but may be, for example, 60 wt.% or less, 70 wt.% or less, 80 wt.% or less, 90 wt.% or less, 95 wt.% or less, 98 wt.% or less, or 99 wt.% or less and may also be 100 wt.%. When the microporous layer (B) is used as an outermost layer, the polypropylene content is preferably 97% or greater. Consequently, contamination of manufacturing equipment due to impurity bleed-out and manufacturing troubles due to poor separation between separators can be suppressed, and therefore, an annealing treatment can be performed on the separator substrate at a higher temperature. For example, an annealing treatment can be performed on the separator substrate at 135°C or higher; and as a result, a separator substrate having high permeability and high porosity tends to be acquired, which facilitates acquisition of a separator with low resistance.

<Material of Microporous Layer (B)>

The microporous layer (B) has polypropylene as a main component. Polypropylene in the microporous layer (B) may be the same material as polypropylene in the microporous layer (A) or may be polypropylene with a different chemical structure, or more specifically, polypropylene differing in at least one of monomer composition, stereoregularity, molecular weight, and crystal structure. Examples of the stereoregularity of polypropylene in the microporous layer (B) include, but not limited to, atactic, isotactic, and syndiotactic homopolymers. Polypropylene according to the present disclosure is preferably an isotactic or syndiotactic high-crystallinity homopolymer.

Polypropylene in the microporous layer (B) is preferably a homopolymer and may also be a copolymer copolymerized with a small amount of comonomer other than propylene, such as an $\alpha$-olefin comonomer, examples of such a copolymer including a block polymer. For example, the amount of propylene structural units contained as repeating units in polypropylene may be, but not limited to, 70 mol% or greater, 80 mol% or greater, 90 mol% or greater, 95 mol% or greater, or 99 mol% or greater. For example, the amount of repeating units contained in polypropylene, the units being derived from a comonomer other than the propylene structure, may be, but not limited to, 30 mol% or less, 20 mol% or less, 10 mol% or less, 5 mol% or less, or 1 mol% or less. One type of polypropylene may be used singly, or a mixture of two or more types may be used.

The weight average molecular weight (Mw) of polypropylene in the microporous layer (B) is preferably 250,000 or greater from the viewpoint of strength of the microporous layer and the like and is preferably 1,000,000 or less from the viewpoint of increasing the pore diameter of the microporous layer and exhibiting excellent dendrite suppression performance. Mw of polypropylene is more preferably 400,000 or greater and 950,000 or less, more preferably 550,000 or greater and 900,000 or less, yet more preferably 600,000 or greater and 900,000 or less, and particularly preferably 700,000 or greater and 900,000 or less.

The upper limit of a value (Mw/Mn) acquired by dividing the weight average molecular weight (Mw) of polypropylene in the microporous layer (B) by the number average molecular weight (Mn) is preferably 7 or less and more preferably 6.5 or less, 6 or less, 5.5 or less, or 5 or less. As the value of Mw/Mn of polypropylene decreases, the melt tension of the acquired microporous layer also tends to decrease. Accordingly, the value of Mw/Mn of polypropylene being 7 or less is preferable for controlling the melt tension of the microporous layer (B) to be low. Further, Mw/Mn may be preferably 1 or greater, such as 1.3 or greater, 1.5 or greater, 2.0 or greater, or 2.5 or greater. Mw/Mn being 1 or greater may allow moderate molecular entanglement to be maintained, which may result in excellent stability during membrane formation. Note that the weight average molecular weight, the number average molecular weight, and Mw/Mn of polyolefin according to the present disclosure are based on molecular weights in terms of polystyrene, the weights being acquired by gel permeation chromatography (GPC) measurement.

The density of polypropylene in the microporous layer (B) may be preferably 0.85 $g/cm^3$ or greater, such as 0.88 $g/cm^3$ or greater, 0.89 $g/cm^3$ or greater, or 0.90 $g/cm^3$ or greater. The density of polypropylene may be preferably 1.1 $g/cm^3$ or less, such as 1.0 $g/cm^3$ or less, 0.98 $g/cm^3$ or less, 0.97 $g/cm^3$ or less, 0.96 $g/cm^3$ or less, 0.95 $g/cm^3$ or less, 0.94 $g/cm^3$ or less, 0.93 $g/cm^3$ or less, or 0.92 $g/cm^3$ or less. The density of polyolefin is related to the crystallinity of polypropylene; and by setting the density of polypropylene to 0.85 $g/cm^3$ or higher, the productivity of microporous layer production is improved, which is particularly advantageous in the dry method.

As long as the microporous layer (B) has polypropylene as a main component, the layer may contain another resin. Examples of another resin include a polyolefin other than polypropylene (also referred to as "another polyolefin"). A polyolefin is a polymer containing a monomer with a carbon-carbon double bond as a repeating unit. Examples of a monomer constituting a polyolefin other than polypropylene include, but not limited to, monomers having carbon-carbon double bonds and two or four to ten carbon atoms, such as ethylene, 1-butene, 4-methyl-1-pentene, 1-hexene, and 1-octene.

The microporous layer (B) may contain a thermoplastic elastomer in addition to polypropylene. Examples of a thermoplastic elastomer include, but not limited to, polypropylene, a polyolefin other than polypropylene (also referred to as "another polyolefin"), and a copolymer of polystyrene and a polyolefin. Examples of polypropylene include low-crystallinity polypropylene comprising a low-stereoregularity region. A polyolefin is a polymer containing a monomer with a carbon-carbon double bond as a repeating unit. Examples of a monomer constituting a polyolefin other than polypropylene include, but not limited to, monomers having carbon-carbon double bonds and two or four to ten carbon atoms, such as ethylene, 1-butene, 4-methyl-1-pentene, 1-hexene, and 1-octene. Examples of a polyolefin include a homopolymer, a copolymer, and a multistage polymer; and, as an example, a polyolefin may contain polyethylene. Preferable examples of a copolymer of polystyrene and a polyolefin include a styrene-(ethylene-propylene)-styrene copolymer (SEPS), a styrene-(ethylene-butene)-styrene copolymer (SEBS), a hydrogenated styrene-(ethylene-butene)-styrene copolymer (hydrogenated SEBS), a styrene-ethylene-styrene copolymer, a crystalline olefin-(ethylene-butene)-crystalline olefin copolymer (CEBC), a hydrogenated crystalline olefin-(ethylene-butene)-crystalline olefin copolymer (hydrogenated CEBC), a styrene-(ethylene-butene)-crystalline olefin copolymer (SEBC), and a hydrogenated styrene-(ethylene-butene)-crystalline olefin copolymer (hydrogenated SEBC). Particularly preferable examples include a hydrogenated styrene-(ethylene-butene)-styrene copolymer (hydrogenated SEBS), a hydrogenated styrene-(ethylene-butene)-crystalline olefin copolymer (hydrogenated SEBC), and a styrene-(ethylene-propylene)-styrene copolymer (SEPS).

An elastomer incompatible with polypropylene is more preferable as a thermoplastic elastomer contained in the microporous layer (B) from the viewpoint of a porous nature and an increase in the pore diameter. Preferable examples of an elastomer incompatible with polypropylene include, but not particularly limited to, a copolymer of polyethylene and another polyolefin and a copolymer of polystyrene and a polyolefin. Preferred examples of a copolymer of polystyrene and a polyolefin include a styrene-(ethylene-propylene)-styrene copolymer (SEPS), a styrene-(ethylene-butene)-styrene copolymer (SEBS), a hydrogenated styrene-(ethylene-butene)-styrene copolymer (hydrogenated SEBS), a styrene-ethylene-styrene copolymer, a crystalline olefin-(ethylene-butene)-crystalline olefin copolymer (CEBC), a hydrogenated crystalline olefin-(ethylene-butene)-crystalline olefin copolymer (hydrogenated CEBC), a styrene-(ethylene-butene) crystalline olefin copolymer (SEBC), and a hydrogenated styrene-(ethylene-butene) crystalline olefin copolymer (hydrogenated SEBC). Particularly preferable examples include a hydrogenated styrene-(ethylene-butene)-styrene copolymer (hydrogenated SEBS), a hydrogenated styrene-(ethylene-butene)-crystalline olefin copolymer (hydrogenated SEBC), and a styrene-(ethylene-propylene)-styrene copolymer (SEPS).

<Melt Flow Rate (MFR) of Microporous Layer (B)>

The upper limit of the melt flow rate (MFR) of the microporous layer (B) (the MFR of a single layer) is preferably 8.0 g/10 min or less and may be, for example, 6.0 g/10 min or less, 4.0 g/10 min or less, 3.0 g/10 min or less, 2.0 g/10 min or less, or 1.1 g/10 min or less from the viewpoint of acquiring a microporous layer (B) with higher strength. For example, the lower limit of the MFR of the microporous layer (B) (the MFR of a single layer) may be, but not limited to, 0.3 g/10 min or greater, 0.35 g/10 min or greater, 0.4 g/10 min or greater, 0.45 g/10 min or greater, or 0.5 g/10 min or greater from the viewpoint of exhibiting an excellent dendrite suppression effect. The MFR of the microporous layer (B) is measured under conditions of a load of 2.16 kg and a temperature of 230°C.

The MFR of the microporous layer (B) being 8.0 g/10 min or less means that the molecular weight of polyolefin contained in the microporous layer (B) is to some extent high. The number of tie molecules binding crystalline materials to each other increases due to a high molecular weight of polyolefin, and therefore, a microporous layer (B) with high strength tends to be acquired. By the MFR of the microporous layer (B) being 0.3 g/10 min or greater, the melt tension of the microporous layer (B) does not become excessively high, which facilitates acquisition of a separator exhibiting an excellent dendrite suppression effect.

The MFR of polypropylene in the microporous layer (B) is preferably 8.0 g/10 min or less and, for example, may be 6.0 g/10 min or less, 4.0 g/10 min or less, 3.0 g/10 min or less, 2.0 g/10 min or less, or 1.1 g/10 min or less from the viewpoint of acquiring a microporous layer (B) with higher strength. For example, the lower limit of the MFR of the microporous layer (B) (the MFR of a single layer) may be, but not limited to, 0.3 g/10 min or greater, 0.35 g/10 min or greater, 0.4 g/10 min or greater, 0.45 g/10 min or greater, or 0.5 g/10 min or greater from the viewpoint of exhibiting an excellent dendrite suppression effect.

The MFR of the microporous layer (B) is preferably higher than the MFR of the microporous layer (A). By setting the MFR of the microporous layer (B) greater than the MFR of the microporous layer (A), the pore diameter of the microporous layer (B) in the acquired separator can be controlled to be larger than the pore diameter of the microporous layer (A).

<Pentad Fraction of Microporous Layer (B)>

The lower limit of the pentad fraction of polypropylene in the microporous layer (B) may be preferably 94.0% or greater, such as 95.0% or greater, 96.0% or greater, 96.5% or greater, 97.0% or greater, 97.5% or greater, 98.0% or greater, 98.5% or greater, or 99.0% or greater, from the viewpoint of acquiring a microporous layer with low air permeability. The upper limit of the pentad fraction of polypropylene may be, but not limited to, 99.9% or less, 99.8% or less, or 99.5% or less. The pentad fraction of polypropylene is measured by using $^{13}$C-nuclear magnetic resonance (NMR).

The pentad fraction of polypropylene being 94.0% or greater indicates high crystallinity of polypropylene. A separator acquired by the stretching-induced pore formation method, particularly the dry method, has pores formed by stretching an amorphous part between crystalline materials; and therefore, when the crystallinity of polypropylene is high, the porous nature is improved, and the air permeability can be kept low, which enables higher battery output.

<Melt Tension of Microporous Layer (B)>

The melt tension $Mt_B$ of the microporous layer (B) at 240°C is preferably 4 mN or greater and 30 mN or less. The lower limit of the melt tension $Mt_B$ is preferably 4 mN or greater, more preferably 7 mN or greater, yet more preferably 10 mN or greater, particularly preferably 13 mN or greater, and most preferably 16 mN or greater from the viewpoint of excellent membrane formability and productivity of the separator substrate comprising the microporous layer A and the microporous layer B. The upper limit of the melt tension $Mt_B$ is preferably 30 mN or less, more preferably 28 mN or less, yet more preferably 26 mN or less, and most preferably 24 mN or less from the viewpoint of providing a large pore diameter and exhibiting excellent dendrite suppression performance.

<Area-average Major Axis Pore Diameter of Microporous Layer (B)>

The area-average major axis pore diameter of the microporous layer (B) on an ND-MD cross-section (hereinafter simply referred to as the "area-average major axis pore diameter") is preferably larger than the area-average major axis pore diameter of the microporous layer (A). Refer to the section "Area-average Major Axis Pore Diameter of Microporous Layer (A)" for details of the relation with the area-average major axis pore diameter of the microporous layer (A).

The area-average major axis pore diameter of the microporous layer (B) on the ND-MD cross-section is preferably 50 nm or greater and 600 nm or less. The lower limit of the area-average major axis pore diameter of the microporous layer (B) is more preferably 120 nm or greater, yet more preferably 140 nm or greater, and further more preferably 160 nm or greater. The upper limit of the area-average major axis pore diameter of the microporous layer (B) that can be combined with any of the lower limits is more preferably 500 nm or less, yet more preferably 400 nm or less, further more preferably 350 nm or less, 300 nm or less, 250 nm or less, or 240 nm or less. When the area-average major axis pore diameter of the microporous layer (B) falls within the range, dendrite short circuiting can be more effectively suppressed.

<Porosity of Microporous Layer (B)>

The porosity of the microporous layer (B) is preferably 40% or greater from the viewpoint of clogging avoidance in the power storage device and the viewpoint of acquisition of excellent low membrane resistance of the separator and is preferably 70% or less from the viewpoint of maintaining the strength of the separator. The porosity of the microporous layer (A) is more preferably 45% or greater and 65% or less, yet more preferably 47% or greater and 60% or less, and particularly preferably 50% or greater and 57% or less.

<Thickness of Microporous Layer (B)>

The thickness of the microporous layer (B) according to the present disclosure may be preferably 10 $\mu$m or less, such as 8 $\mu$m or less, 7 $\mu$m or less, 6 $\mu$m or less, 5 $\mu$m or less, 4.5 $\mu$m or less, or 4 $\mu$m or less, from the viewpoint of energy densification in the power storage device, and the like. The lower limit of the thickness of the microporous layer (B) may be preferably 1 $\mu$m or greater, such as 2 $\mu$m or greater, 3 $\mu$m or greater, or 3.5 $\mu$m or greater, from the viewpoint of strength and the like.

<Additive in Microporous Layer (B)>

The microporous layer (B) having polypropylene as a main component may further contain additives, such as an elastomer, a crystallization nucleating agent, an antioxidant, and a filler as needed, in addition to polypropylene. For example, the amount of the additives may be, but not particularly limited, 0.01 wt.% or greater, 0.1 wt.% or greater, or 1 wt.% or greater, and 10 wt.% or less, 7 wt.% or less, or 5 wt.% or less, on the basis of the total weight of the microporous layer (B).

<Relation between Microporous Layer (A) and Microporous Layer (B)>

The ratio between the melt tension $Mt_A$ of the microporous layer (A) at 240°C and the melt tension $Mt_B$ of the microporous layer (B) at 240°C is 1.05 or greater and 4.0 or less. By setting the ratio $Mt_A/Mt_B$ to 1.05 or greater, the pore diameter of the microporous layer (A) of the acquired separator can be controlled to be sufficiently small, and the pore diameter of the microporous layer (B) can be controlled to be sufficiently large; and dendrite short circuiting in the power storage device can be effectively suppressed by suppression of growth of dendrites at a laminated interface with a discontinuous pore structure. By setting $Mt_A/Mt_B$ to 4.0 or less, the crystal orientation during membrane formation is enhanced and enters a highly oriented crystalline state; and as a result, a separator having an excellent porous nature and air permeability can be acquired. Being highly oriented also leads to high MD tensile strength. Further, an excellent porous nature provides an effect of suppressing dendrite formation in the battery device and suppressing dendrite short circuiting. The lower limit of $Mt_A/Mt_B$ is more preferably 1.1 or greater, 1.15 or greater, 1.2 or greater, or 1.25 or greater, and the upper limit that can be combined with any of the lower limits is preferably 3.5 or less, 3.3 or less, 3.0 or less, 2.5 or less, 2.4 or less, 2.3 or less, or 2.2 or less.

The ratio $MFR_B/MFR_A$ between the MFR of the microporous layer (B) ($MFR_B$) and the MFR of the microporous layer (A) ($MFR_A$) is preferably 1.02 or greater and 10.0 or less. By setting $MFR_B/MFR_A$ to 1.02 or greater, the pore diameter of the microporous layer (A) of the acquired separator can be controlled to be sufficiently small, and the pore diameter of the microporous layer (B) can be controlled to be sufficiently large; and therefore, dendrite short circuiting in the power storage device can be effectively suppressed. By setting $MFR_B/MFR_A$ to 10.0 or less, a separator having stable membrane formability and productivity, and an excellent porous nature and air permeability can be acquired. Note that $MFR_B/MFR_A$ is preferably 1.05 or greater and 6.0 or less, more preferably 1.1 or greater and 5.0 or less, particularly preferably 1.1 or greater and 4.0 or less, and most preferably 1.1 or greater and 3.0 or less.

The ratio $Mw_A/Mw_B$ between the weight average molecular weight $Mw_A$ of polypropylene in the microporous layer (A) and the weight average molecular weight $Mw_B$ of polypropylene in the microporous layer (B) is preferably 1.02 or greater and 2.0 or less. By setting $Mw_A/Mw_B$ to 1.02 or greater, the melt tension ratio $Mt_A/Mt_B$ between the microporous layer (A) and the microporous layer (B) can be controlled to be high, and as a result, an excellent dendrite suppression effect in the power storage device can be exhibited. By setting $Mt_A/Mt_B$ to 2.0 or less, a separator having stable membrane formability and productivity, and an excellent porous nature and excellent air permeability can be acquired. Note that $Mw_A/Mw_B$ is preferably 1.02 or greater and 1.8 or less, more preferably 1.03 or greater and less than 1.6, and most preferably 1.05 or greater and 1.4 or less.

The smaller value out of the area-average major axis pore diameter of the microporous layer (A) and the area-average major axis pore diameter of the microporous layer (B) is 170 nm or greater and 800 nm or less. The lower limit of the smaller value is preferably 170 nm or greater, more preferably 200 nm or greater, yet more preferably 230 nm or greater, further more preferably 260 nm or greater, and particularly preferably 280 nm or greater from the viewpoint of guaranteeing excellent output, i.e., low membrane resistance in the power storage device. The upper limit of the smaller value is preferably 800 nm or less, preferably 600 nm or less, more preferably 500 nm or less, yet more preferably 450 nm or less, further more preferably 400 nm or less, and particularly preferably 350 nm or less from the viewpoint of excellent puncture strength or dendrite short circuiting suppression. The area-average major axis pore diameter of the microporous layer (A) is preferably smaller than the area-average major axis pore diameter of the microporous layer (B). The larger value out of the microporous layer (A) and the area-average major axis pore diameter of the microporous layer (B) is preferably 200 nm or greater and 600 nm or less, more preferably 210 nm or greater and 500 nm or less, and yet more preferably 220 nm or greater and 400 nm or less from the viewpoint of more effective dendrite short circuiting suppression. The ratio $L_B/L_A$ between the area-average major axis pore diameter $L_B$ of the microporous layer (B) and the area-average major axis pore diameter $L_A$ of the microporous layer (A) is preferably 1.1 or greater and 6.0 or less. Setting $L_B/L_A$ to 1.1 or greater results in a sufficiently small pore diameter of the microporous layer (A) and a sufficiently large pore diameter of the microporous layer (B), which allows effective suppression of dendrite short circuiting in the power storage device. By setting $L_B/L_A$ to 6 or less, a separator having an excellent porous nature and excellent air permeability can be acquired. Note that $L_B/L_A$ is preferably 1.1 or greater and 4.0 or less, more preferably 1.15 or greater and 3.0 or less, particularly preferably 1.2 or greater and 2.5 or less, and most preferably 1.3 or greater and 2.0 or less.

<Layer Structure of Separator Substrate>

The substrate of the separator for a power storage device (herein simply referred to as the "separator substrate") includes at least one each of the microporous layer (A) and the microporous layer (B). The separator substrate may have a multilayer structure comprising three or more layers comprising two or more layers of at least one of the microporous layer (A) and/or the microporous layer (B). Examples of such a structure include a microporous layer (A)/microporous layer (B) two-layer structure and a microporous layer (A)/microporous layer (B)/microporous layer (A) three-layer structure. The separator substrate may include a layer other than the microporous layer (A) and the microporous layer (B). Examples of a layer other than the microporous layer (A) and the microporous layer (B) include a microporous layer, other than (A) and (B), having a polyolefin as a main component, a layer containing an inorganic substance, and a layer containing a heat-resistant resin. For example, the separator substrate may have a multilayer structure comprising four or more layers, such as a microporous layer (A)/microporous layer (B)/microporous layer (C)/microporous layer (A) structure. A symmetrical laminated structure is preferable from the viewpoint of ease of manufacturing and suppression of separator curling.

At least one microporous layer (A) and at least one microporous layer (B) are preferably adjacent to each other in the layer structure of the substrate of the separator for a power storage device from the viewpoint of effective dendrite short circuiting suppression. "Being adjacent to each other" refers to a state of the microporous layer (A) and microporous layer (B) being directly laminated. When the separator substrate has a multilayer structure comprising three or more layers, each microporous layer (A) is preferably adjacent to each microporous layer (B). For example, in the case of a microporous layer (A)/microporous layer (B)/microporous layer (A) three-layer structure, each of the two outermost microporous layers (A) is preferably adjacent to the inner microporous layer (B). Further, the microporous layer (A) preferably constitutes an outermost layer on at least one side of the separator substrate and particularly preferably constitutes the outermost layers on both sides of the separator substrate. When the microporous layer (A) constitutes an outermost layer, dendrite short circuiting tends to be effectively suppressed. Alternatively, the microporous layer (B) may also preferably constitute an outermost layer on at least one side of the separator substrate and may constitute the outermost layers on both sides of the separator substrate. When the microporous layer (B) constitutes an outermost layer, the membrane resistance further decreases, and the cycling performance tends to improve due to avoidance of dendrite clogging.

<Thickness of Separator Substrate>

The upper limit of the thickness of the separator substrate is preferably 25 $\mu$m or less and may be, for example, 22 $\mu$m or less, 20 $\mu$m or less, 18 $\mu$m or less, 16 $\mu$m or less, 14 $\mu$m or less, or 12 $\mu$m or less from viewpoint of energy densification in the power storage device, and the like. The lower limit of the thickness of the separator substrate is preferably 6 $\mu$m or greater and may be, for example, 7 $\mu$m or greater, 8 $\mu$m or greater, 9 $\mu$m or greater, or 10 $\mu$m or greater from the viewpoint of strength and the like.

<Air Permeability (Air Permeation Resistance) of Separator Substrate>

The upper limit of the air permeability of the separator substrate is preferably less than 220 seconds/100 $cm^3$ and more preferably 200 seconds/100 $cm^3$ or less and may be, for example, 190 seconds/100 $cm^3$ or less, 185 seconds/100 $cm^3$ or less, 180 seconds/100 $cm^3$ or less, or 175 seconds/100 $cm^3$ or less. When the air permeability is low, the connectivity of the pore structure tends to increase, and as a result, the movement of Li ions is less likely to be hindered; and therefore, low membrane resistance is considered to be achieved. The lower limit of the air permeability of the separator substrate is preferably 10 seconds/100 $cm^3$ or greater and may be, but not limited to, for example, 50 seconds/100 $cm^3$ or greater, 60 seconds/100 $cm^3$ or greater, or 70 seconds/100 $cm^3$ or greater. High air permeability results in an increased weight per unit area and a minute membrane structure, and therefore, a separator having high puncture strength tends to be acquired.

<Tensile Strength of Separator Substrate>

The tensile strength of the separator for a power storage device is preferably 2000 $kgf/cm^2$ or greater, more preferably 2200 $kgf/cm^2$ or greater, and yet more preferably 2400 $kgf/cm^2$ or greater. When the MD tensile strength is 2000 $kgf/cm^2$ or greater, the strength in the MD increases due to strong orientation being imparted to the separator, which allows the separator to more easily have high puncture strength and allows the battery winding operation to be more easily performed in the battery production process. Further, when the MD tensile strength is 2000 $kgf/cm^2$ or greater, the thermal contraction rate in the TD can be reduced, and therefore, the resistance to short circuiting due to thermal contraction in the TD is enhanced during battery winding. Further, when the MD tensile strength is 2000 $kgf/cm^2$ or greater, the crystal during membrane formation is likely to exhibit high orientation in the MD, and therefore, efficient stretching-induced pore formation is promoted, which results in lower membrane resistance. The upper limit of the MD tensile strength is preferably 3200 $kgf/cm^2$ or less, more preferably 3000 $kgf/cm^2$ or less, and yet more preferably 2800 $kgf/cm^2$ or less. When the MD tensile strength is 3200 $kgf/cm^2$ or less, a crack is less likely to be formed in the MD, the puncture strength is likely to be enhanced, and the issue of the separator tearing vertically (in the MD) is less likely to occur during handling in the battery production process. Further, when the MD tensile strength is 3200 $kgf/cm^2$ or less, collapse of a pore during stretching-induced pore formation can be suppressed, and the membrane resistance is reduced.

The MD/TD tensile strength ratio is preferably 16 or greater and 30 or less, more preferably 18 or greater and 28 or less, and yet more preferably 20 or greater and 26 or less. When the MD/TD tensile strength ratio is 16 or greater, the thermal contraction rate in the TD can be reduced, and therefore, the resistance to short circuiting due to thermal contraction is enhanced during battery winding. When the ratio is 30 or less, a crack is less likely to be formed in the MD, the puncture strength is likely to be enhanced, and the issue of the separator tearing vertically (in the MD) is less likely to occur during handling in the battery production process.

<Porosity of Separator Substrate>

The porosity of the separator substrate is preferably 40% or greater from the viewpoint of clogging avoidance in the power storage device and the viewpoint of acquiring excellent low membrane resistance of the separator and is preferably 70% or less from the viewpoint of maintaining the strength of the separator. The lower limit of the porosity of the separator substrate is preferably 45% or greater, more preferably 47% or greater, and particularly preferably 50% or greater. The upper limit of the porosity of the separator substrate that can be combined with any of the lower limits is more preferably 65% or less, yet more preferably 60% or less, and particularly preferably 57% or less.

<Puncture Strength of Separator Substrate>

The lower limit of the puncture strength of the separator substrate converted to a thickness of 14 $\mu$m is preferably 240 gf or greater, more preferably 260 gf or greater, 280 gf or greater, 290 gf or greater, or 300 gf or greater, and particularly preferably 320 gf or greater. The upper limit of the puncture strength of the separator substrate converted to a thickness of 14 $\mu$m may be, but not limited to, preferably 600 gf or less, such as 580 gf or less or 550 gf or less.

<Thermal Contraction Rate of Separator Substrate>

The thermal contraction rate of the separator substrate in the width direction (TD) after a heat treatment is performed at 150°C for 1 hour is -1.0% or greater and 3.0% or less. In other words, the above means that the separator substrate exhibits very little thermal contraction in the TD also at a high temperature. The thermal contraction rate being 3.0% or less allows effective suppression of short circuiting at a high temperature. The reason that the thermal contraction rate is -1.0% or greater is that the substrate expands in the TD, and the thermal contraction rate may take on a negative value less than 0% during measurement of the thermal contraction rate. The thermal contraction rate may be 0% or greater, or greater than 0%. Examples of a method for manufacturing a separator substrate with the thermal contraction rate equal to or greater than -1.0% and equal to or less than 3.0% include a method of manufacturing a separator by uniaxial stretching in the MD and preferably include a method of manufacturing a separator by a dry method based on uniaxial stretching. A method for manufacturing a separator based on biaxial stretching in the MD and the TD, represented by a wet separator, generally exhibits very extensive thermal contraction in the TD, whereas a separator substrate with the thermal contraction rate equal to or greater than -1.0% and equal to or less than 3.0% can be easily acquired with a dry separator based on uniaxial stretching.

<Method for Manufacturing Separator for Power Storage Device>

A method for manufacturing a separator for a power storage device includes a melt extrusion process of acquiring a resin sheet (a precursor sheet) by melt-extruding a resin composition having polypropylene as a main component (also referred to as a "polypropylene-based resin composition") and a pore formation process of making the acquired precursor sheet porous by pore formation. The methods for manufacturing a microporous layer are roughly classified into a dry method not using a solvent in the pore formation process and a wet method using a solvent.

Examples of the dry method include a method of melt-kneading and extruding a polypropylene-based resin composition and then separating the polypropylene crystal interface by a heat treatment and stretching, and a method of forming a membrane from a polypropylene-based resin composition and an inorganic filler by melt kneading and then separating the interface between polypropylene and the inorganic filler by stretching.

Examples of the wet method include a method of melt kneading a polypropylene-based resin composition and a pore forming material to form a film shape, stretching the film shape as needed, and then extracting the pore forming material, and a method of dissolving a polypropylene-based resin composition and then solidifying polypropylene and removing the solvent at the same time by immersing the composition in a poor solvent for polypropylene.

A single-screw extruder and a twin-screw extruder may be used for melt kneading of a polypropylene-based resin composition, and examples of other equipment that may also be used include a kneader, a Labo Plastomill, a kneading roll, and a Banbury mixer.

The polypropylene-based resin composition may optionally contain a resin other than polypropylene and an additive depending on the method for manufacturing the microporous layer or physical properties of the target microporous layer. Examples of an additive include a pore forming material, a fluorine-based flow modifier, wax, a crystal nucleating agent, an antioxidant, metallic soaps such as a metal salt of an aliphatic carboxylic acid, an ultraviolet absorber, a light stabilizer, an antistatic agent, an antifog agent, and a color pigment. Examples of a pore forming material include a plasticizer, an inorganic filler, and a combination of the two.

Examples of a plasticizer include hydrocarbons such as liquid paraffin and paraffin wax, esters such as dioctyl phthalate and dibutyl phthalate, and higher alcohols such as oleyl alcohol and stearyl alcohol.

Examples of an inorganic filler include oxide-based ceramics such as alumina, silica (silicon oxide), titania, zirconia, magnesia, ceria, yttria, zinc oxide, and iron oxide; nitride-based ceramics such as silicon nitride, titanium nitride, and boron nitride; ceramics such as silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth, and silica sand; and glass fibers.

A preferred method for manufacturing a separator substrate is a dry lamellar crystal pore formation process separating the polypropylene crystal interface by a heat treatment and stretching. A method for manufacturing a separator substrate comprising the microporous layer (A) and the microporous layer (B) preferably uses at least one of the following melt extrusion processes, i.e., methods (i) and (ii):

(i) acquiring a precursor sheet by forming the microporous layer (A) and the microporous layer (B) by coextrusion, or
(ii) acquiring a precursor sheet by separately forming the microporous layer (A) and the microporous layer (B) by extrusion and then laminating the layers.

Then, the acquired precursor sheet is subjected to annealing, cold stretching, hot stretching, and thermal relaxation processes.

Out of the coextrusion process (i) and the lamination process (ii) described above, the coextrusion process (i) is preferred from the viewpoint of manufacturing costs, and the like. In the coextrusion process (i), it is preferable to effectively perform rapid cooling by ejecting the resin at the lowest possible temperature and blowing low-temperature air as extrusion conditions for the microporous layers (A) and (B). It is preferable to perform rapid cooling by air after the membrane formation, the temperature of the blown air being preferably 20°C or lower and more preferably 15°C or lower. By blowing such cold air controlled at a low temperature, the resin after membrane formation is uniformly oriented in the MD.

By performing an annealing process in both the coextrusion process (i) and the lamination process (ii) that are described above, the crystal structures of the microporous layers (A) and (B) tend to grow, and the porous nature tends to be improved. Applying annealing at a specific temperature for a predetermined time tends to allow both microporous layers (A) and (B) to acquire an excellent area-average major axis pore diameter, high porosity, and low air permeability. The reason is considered that the crystals grow without disturbance in the crystal structure and a highly porous nature is acquired. The temperature range of the annealing process is preferably 135°C or higher and 160°C or lower, preferably 140°C or higher, and yet more preferably 150°C or higher. The duration of the annealing process is preferably 20 minutes or longer and more preferably 60 minutes or longer. Consequently, high orientation is likely to be exhibited, which leads to high MD tensile strength and high puncture strength, and therefore, efficient stretching-induced pore formation is promoted. As a result, low resistance and high puncture strength tend to be able to coexist. In particular, in the case of a separator substrate being produced by using the coextrusion process (i) and comprising laminated resins with different melt tensions, it is difficult to form every layer of the separator substrate at an optimal temperature and under an optimum cooling condition. An inability to form a membrane at the optimum temperature may hinder crystal orientation which results in lower MD tensile strength and may prevent efficient stretching-induced pore formation, which leads to higher membrane resistance. In that case, it is effective to perform an annealing treatment at the aforementioned high annealing temperature and to perform hot stretching and thermal relaxation at a high hot stretching ratio to be described later.

The method for manufacturing a separator substrate may include a stretching process after the annealing process. Both uniaxial stretching and biaxial stretching can be used as stretching processing. While not being limited, uniaxial stretching is preferable from the viewpoint of manufacturing costs when the dry method is used, reduction in thermal contraction in the TD, and the like. The elongation ratio in the MD in cold stretching [(dimension after stretching - dimension before stretching)/dimension before stretching $\times$ 100 (%)] is preferably 5% or greater and 20% or less, more preferably 8% or greater and 20% or less, and yet more preferably 8% or greater and 15% or less, which tends to allow acquisition of a separator having a relatively large area-average major axis pore diameter. The temperature in cold stretching is preferably 10°C or higher and 50°C or lower and more preferably 20°C or higher and 30°C or lower, and cold stretching may be performed at room temperature (23$\pm$2°C) from the viewpoint of manufacturing costs. Uniaxial stretching is preferable from the viewpoint of improving both the strength and low resistance of the acquired separator substrate and the viewpoint of manufacturing costs, reduction in thermal contraction in the TD, and the like.

In order to suppress thermal contraction of the separator substrate, a heat treatment process may be performed after the stretching process or the pore formation process for the purpose of thermal fixing. The heat treatment process may include a hot stretching operation performed in such a way as to provide a predetermined temperature and a predetermined stretch ratio for the purpose of adjusting physical properties and/or a thermal relaxation operation performed in such a way as to provide a predetermined temperature and a predetermined relaxation ratio for the purpose of reducing contraction stress applied during membrane formation and stretching. The thermal relaxation operation may be performed after the hot stretching operation. In hot stretching and thermal relaxation, the dimension in the MD is preferably stretched to 140% or greater and 220% or less, more preferably 160% or greater and 200% or less assuming the dimension in the MD before stretching to be 100%, and subsequently, the dimension is preferably relaxed to 10% or greater and 50% or less and more preferably 20% or greater and 40% or less in the MD. The heat treatment processes can be performed by using a tenter or a roll stretching machine. The temperature in the heat treatment process is preferably 120°C or higher and 160°C or lower and more preferably 130°C or higher and 150°C or lower.

The acquired separator substrate can be used directly as a separator for a power storage device without further processing. Optionally, an additional layer such as a coating layer may be provided on one or both sides of the separator substrate, and a surface treatment such as a corona treatment may be applied as needed.

<Power Storage Device>

A power storage device according to the present disclosure includes the separator for a power storage device according to the present disclosure. The power storage device according to the present disclosure includes a positive electrode and a negative electrode, and the separator for a power storage device according to the present disclosure is preferably placed between the positive electrode and the negative electrode. Dendrites generated in the power storage device grow in such a way as to pass through the pores on the surface of the separator and have high penetration strength toward the positive electrode-side surface, and therefore, by placing the microporous layer (A) with relatively high melt tension and a small pore diameter on the surface of the separator, the growth of dendrites into the separator can be effectively suppressed; and as a result, dendrite short circuiting tends to be effectively suppressed.

Examples of the power storage device include, but not limited to, lithium secondary batteries (including an all-solid-state lithium battery, a lithium-sulfur battery, and a lithium-air battery), a lithium-ion secondary battery, a sodium secondary battery, a sodium-ion secondary battery, a magnesium secondary battery, a magnesium-ion secondary battery, a calcium secondary battery, a calcium-ion secondary battery, an aluminum secondary battery, an aluminum-ion secondary battery, a nickel-hydrogen battery, a nickel-cadmium battery, an electric double-layer capacitor, a lithium-ion capacitor, a redox flow battery, and a zinc-air battery. Among the above, lithium secondary batteries, a lithium-ion secondary battery, and a lithium-ion capacitor are preferable from the viewpoint of high energy density, lower cost, and durability, and a lithium-ion secondary battery is more preferable.

For example, the power storage device can be produced by forming a laminated electrode body or a wound electrode body by laminating a positive electrode and a negative electrode through the separator described above and winding the two as needed, then loading the body into a housing, connecting the positive electrode and the negative electrode to a positive electrode terminal and a negative electrode terminal of the housing through a lead body or the like, and further sealing the housing after injecting a nonaqueous solvent such as chain or cyclic carbonate, and a nonaqueous electrolyte solution containing an electrolyte such as a lithium salt into the housing.

The power storage device is more preferably a lithium-ion secondary battery, and a preferred embodiment of the lithium-ion secondary battery will be described.

A generally known positive electrode may be used as the positive electrode without being particularly limited as long as the positive electrode functions as a positive electrode for a lithium-ion secondary battery. The positive electrode preferably contains one or more types of materials selected from a group including materials that can occlude and release lithium ions as positive electrode active materials. Examples of a preferred positive electrode include lithium cobalt oxides represented by $LiCoO_2$, spinel-type lithium manganese oxides represented by $Li_2Mn_2O_4$, spinel-type lithium nickel manganese oxides represented by $Li_2Mn_{1.5}Ni_{0.5}O_4$, lithium nickel oxides represented by $LiNiO_2$, lithium-containing composite metal oxides represented by LiMO2 (where M denotes two or more types of elements selected from a group including Ni, Mn, Co, Al, and Mg), and lithium iron phosphate compounds represented by $LiFePO_4$ from the viewpoint of battery capacity and safety. Among the above, from the viewpoint of high safety and long-term stability, more preferable examples include lithium cobalt oxides represented by LiCoO2, lithium nickel oxides represented by LiNiO2, lithium-containing composite metal oxides represented by LiMO2 (where M denotes two or more types of elements selected from a group including Ni, Mn, Co, Al, and Mg), and lithium iron phosphate compounds represented by $LiFePO_4$, and particularly preferable examples include lithium iron phosphate compounds represented by LiFePO4.

The negative electrode is not particularly limited and may be a generally known negative electrode as long as the negative electrode functions as a negative electrode of a lithium-ion secondary battery. The negative electrode preferably contains one or more types of materials selected from a group including materials that can occlude and release lithium ions and metal lithium as negative electrode active materials. In other words, the negative electrode preferably contains one or more types of materials selected from a group including metal lithium, a carbon material, a material containing an element that can form an alloy with lithium, and a lithium-containing compound as negative electrode active materials. Examples of such materials other than metal lithium include carbon materials represented by hard carbon, soft carbon, artificial graphite, natural graphite, pyrolytic carbon, coke, glassy carbon, a calcined body of an organic polymer compound, mesocarbon microbeads, carbon fiber, activated carbon, graphite, carbon colloid, and carbon black.

EXAMPLES

<<Measurement and Evaluation Methods>>

[Measurement of Melt Flow Rate (MFR)]

The melt flow rate (MFR) (g/10 min) of the microporous layer (A) was measured in conformity with JIS K 7210 under conditions of a temperature of 230°C and a load of 2.16 kg. The MFR of polypropylene was measured in conformity with JIS K 7210 under conditions of a temperature of 230°C and a load of 2.16 kg. The melt flow rate (MFR) of polyethylene was measured in conformity with JIS K 7210 under conditions of a temperature of 230°C and a load of 2.16 kg.

[Measurement of Mw and Mn by Gel Permeation Chromatography (GPC)]

By using Agilent PL-GPC220, measurements were performed on standard polystyrene under the following conditions, and a calibration curve was created. Measurements were also performed on a polymer sample by the chromatograph under the same conditions, and based on the calibration curve, the weight average molecular weight (Mw), the number average molecular weight (Mn), and an MWD (Mw/Mn) acquired by dividing the weight average molecular weight (Mw) by the number average molecular weight (Mn) in terms of polystyrene in the polymer were calculated under the following conditions.

    column: TSKgel GMHHR-H (20) HT (7.8 mm I. D. $\times$ 30 cm) two sets
    mobile phase: 1,2,4-trichlorobenzene
    detector: RI
    column temperature: 160°C
    sample concentration: 1 mg/ml
    calibration curve: polystyrene

[Measurement of Melt Tension]

The melt tension (mN) of the microporous membrane was measured under the following conditions by using a Capilograph manufactured by Toyo Seiki Seisaku-sho, Ltd.

- capillary: diameter 1.0 mm, length 20 mm
- cylinder extrusion speed: 2 mm/min
- take-up speed: 60 m/min
- temperature: 230°C

[Measurement of Pentad Fraction]

The pentad fraction of polypropylene was calculated by using the peak height method from a $^{13}$C-NMR spectrum assigned based on the description in Polymer Analysis Handbook (edited by the Japan Society for Analytical Chemistry). The measurement of the $^{13}$C-NMR spectrum was performed by dissolving polypropylene pellets into o-dichlorobenzene-d by using the JEOL-ECZ500 under conditions of a measurement temperature of 145°C and a number of scans of 25,000.

[Measurement of Thickness ($\mu$m)]

The thickness ($\mu$m) of the separator substrate was measured at a room temperature of $23\pm2$°C by a Digimatic Indicator IDC112 manufactured by Mitutoyo Corporation. The thickness of each microporous layer was calculated from cross-sectional SEM image data acquired by a method for evaluating an area-average major axis pore diameter to be described later.

[Measurement of Porosity (%)]

A sample having dimensions of 10 cm $\times$ 10 cm was cut from the separator or the microporous layer, the volume ($cm^3$) and the weight (g) of the sample were found, and the porosity was calculated by using the following equation, based on the volume, the weight, and the density (g/$cm^3$).

$$\text{Porosity }(\%) = (\text{Volume} - \text{Weight/Density})/\text{Volume} \times 100$$

[Air permeability (sec/100 cm$^3$)]

The air permeation resistance (sec/100 cm$^3$) of the separator substrate was measured by using a Gurley-type air permeability tester conforming to JIS P-8117.

[Air Permeability (sec/100 cm$^3$) after High-temperature Treatment]

A samples acquired by cutting the separator substrate into a 100 mm × 100 mm square was placed in a hot-air dryer (DF1032 manufactured by Yamato Scientific Co., Ltd.), and a heat treatment was performed under atmospheric pressure in air at 140°C for 30 minutes. The sample was taken out of the hot-air dryer and was allowed to cool at 25°C for 10 minutes; and then, the air permeation resistance (seconds/100 cm$^3$) of the separator substrate was measured by using the Gurley-type air permeability tester conforming to JIS P-8117.

[Thermal Contraction Rate (%)]

A sample being acquired by cutting the separator substrate into a square measuring 50 mm in each of the MD and the TD and being placed on copy paper was put into a hot-air dryer (DF1032 manufactured by Yamato Scientific Co., Ltd.), and a heat treatment was performed under atmospheric pressure in air at a temperature of 150°C for 1 hour. The sample was taken out of the hot-air dryer and was allowed to cool at 25°C for 10 minutes, and then the dimensional shrinkage ratio was found.

thermal contraction rate (%): [dimension before heating (mm) - dimension after heating (mm)]/[dimension before heating (mm)] × 100

[MD Tensile Strength of Separator]

The tensile strength of the separator was measured by setting a sample length before testing to 35 mm and stretching the sample at a speed of 100 mm/min by using a tensile testing machine (TG-1kN manufactured by MinebeaMitsumi Inc.). The tensile strength was defined as a value acquired by dividing the strength when a sample yields (a tensile load value), or, when the sample was cut (ruptured) before yielding, the strength when the sample was cut (a tensile load value) by the cross-sectional area of the sample. The tensile strength (kgf/cm$^2$) of the separator in the MD was measured.

[Puncture Strength]

A needle with a hemispherical tip having a radius of 0.5 mm was prepared, the separator was placed between two plates each having an opening having a diameter (dia.) of 11 mm, and the needle, separator, and the plates were set. A puncture test was performed by using "MX2-50N" manufactured by IMADA Co., Ltd. under conditions of the radius of curvature of the needle tip being 0.5 mm, the diameter of an opening in a separator holding plate being 11 mm, and the puncture speed being 25 mm/min. The needle was brought into contact with the separator, and the maximum puncture load [i.e., the puncture strength (gf)] was measured. The puncture strength (gf) of the separator substrate converted to a thickness of 14 μm was found by dividing the puncture strength (gf) by the thickness of the separator (μm) and multiplying the quotient by 14 μm.

[Area-average Major Axis Pore Diameter (nm)]

The area-average major axis pore diameter was measured by image analysis of a cross-sectional SEM observation. As a pretreatment, ruthenium staining was performed on the separator, and a cross-sectional sample was prepared by freeze fracturing. A cross-section is assumed to be an MD-ND plane. A microscopic sample was acquired by fixing the aforementioned cross-sectional sample to an SEM sample stage for cross-sectional observation by a conductive adhesive (carbon-based), drying the sample, and then performing osmium coating as a conductive treatment by using an osmium coater (HPC-30W manufactured by Vacuum Device Inc.) under conditions of an applied voltage adjustment knob setting of 4.5 and a discharge time of 0.5 seconds. Next, three arbitrary points on the surface of the microporous membrane were observed by using a scanning electron microscope (S-4800 manufactured by Hitachi High-Tech Corporation) under conditions of an acceleration voltage of 1 kV, a detection signal of LA10, a working distance of 5 mm, and a magnification of 5000.

By binarizing the observed image by the Otsu method by using the image processing software ImageJ, the resin part and the pore part were separated, and the average major axis length of the pore part was calculated. At this time, a pore the pore area of which existing both within and out of the imaging range is 0.001 $nm^2$ or less was excluded from the measurement target. The average diameter was calculated by using the area average, based on the area of each pore.

[Battery Performance (Evaluation of Dendrite Short Circuiting)]

An electrolyte solution composed of a mixture of ethylene carbonate and ethyl methyl carbonate in a volume ratio of 1:2 containing 1 mol/L of $LiPF_6$ as a lithium salt was used as an electrolyte solution.

As for a positive electrode active material, lithium nickel manganese cobalt mixed oxide ($LiNi_{0.5}Co_{0.2}Mn_{0.3}O_2$), carbon black powder (product name: SuperP Li, manufactured by Timcal, Ltd.) as a conductive additive, and PVDF as a binder were mixed in a weight ratio of (mixed oxide):(conductive additive):(binder) = 100:3.5:3, the mixture was applied to both sides of an aluminum foil as a positive electrode current collector with a thickness of 15 $\mu$m, and after drying, a double-sided coated positive electrode was produced by pressing the coated foil by roll pressing.

As for a negative electrode active material, graphite powder with a particle diameter of 22 $\mu$m (D50) (product name: MAG, manufactured by Hitachi Chemical Company, Ltd.), a binder (product name: BM400B, manufactured by Zeon Corporation), and carboxymethyl cellulose as a thickener (product name: #2200, manufactured by Daicel Corporation) were mixed in a weight ratio of (graphite powder):(binder):(thickener) = 100:1.5:1.1, the mixture was applied to one side and both sides of copper foils with a thickness of 10 $\mu$m as negative electrode current collectors, then, the solvent was removed by drying, and then, a single-sided coated negative electrode and a double-sided coated negative electrode were produced by pressing the respective coated copper foils by roll pressing.

The acquired positive electrodes and the acquired negative electrodes were laminated in an order of single-sided coated negative electrode/double-sided coated positive electrode/double-sided coated negative electrode/double-sided coated positive electrode/single-sided coated negative electrode while inserting a separator produced as described below between facing surfaces of the respective active materials. Note that the microporous layer (A) was placed in such a way as to face the negative electrode. Next, the acquired laminated body was inserted into a bag (a battery exterior) made of a laminated film in which both sides of an aluminum foil (thickness 40 $\mu$m) are coated with resin layers, while protruding the terminals of the positive and negative electrodes into the bag. Subsequently, a sheet lithium-ion secondary battery was produced by injecting the electrolyte solution prepared as described above into a 0.8 mL bag and vacuum sealing the bag.

The acquired sheet lithium-ion secondary battery was accommodated in a constant temperature chamber (product name: PLM-73S, manufactured by Futaba Kagaku Co., Ltd.) set at 25°C, was then connected to a charge-discharge device (product name: ACD-01, manufactured by Asuka Electronics Co., Ltd.), and was left standing for 16 hours. Next, the initial charge and discharge of the battery was performed by repeating three charge-discharge cycles each comprising charging the battery at a constant current of 0.05 C until the voltage reaches 4.35 V, then charging the battery at a constant voltage of 4.35 V for 2 hours, and then discharging the battery at a constant current of 0.2 C until the voltage reaches 3.0 V. Note that 1 C refers to a current value when the total capacity of the battery is discharged in 1 hour.

After the initial charge and discharge, the battery was accommodated in a constant temperature chamber set at 10°C, and a charge-discharge cycle comprising charging the battery at a constant current of 1 C until the voltage reaches 4.50 V, then charging the battery at a constant voltage of 4.50 V for 1 hour, then leaving the battery standing in an open-circuit state for 1 hour, and then discharging the battery at a constant current of 1 C until the voltage reaches 3.0 V was repeated 10 times; and occurrence of dendrite short circuiting was confirmed by using 10 sheet lithium-ion secondary batteries. The pass rate (%) was calculated from the number of sheet lithium-ion secondary batteries in which short circuiting did not occur out of 10 batteries. Dendrite short circuiting was determined to have occurred when the voltage dropped by 0.3 V or greater while the battery was left standing in an open circuit state after completion of charging or when the battery could not be charged to 4.5 V within 2 hours during constant-current charging at 1 C.

[Membrane Resistance Measurement]

The membrane resistance (measured ion resistance) value of a microporous membrane immersed in an electrolyte solution is very significant for battery manufacturing technology due to the impact of the microporous membrane on electric performance. The membrane resistance value is a more comprehensive measured value related to permeability compared with the Gurley value since the membrane resistance value is measured in an actual electrolyte solution in an actual battery use. The membrane resistance value of a microporous membrane is substantially the ion resistance value of an electrolyte solution penetrating into the pores of the microporous membrane. Normally, a microporous membrane immersed in an electrolyte solution has a resistance value approximately six to seven times greater than the resistance value of an equivalent volume of the displaced electrolyte solution. The resistance value is a function of the porosity (the number of pores) of the membrane, torsion (tortuosity), the resistance value of the electrolyte solution, the thickness of the membrane, and the extent to which the electrolyte solution wets the pores of the membrane. The characteristic of the membrane resistance value is determined by cutting small pieces of microporous membrane from the final material and then placing the pieces between two shut-off electrodes. The microporous membrane is completely saturated with a battery electrolyte solution containing 1.0 M of $LiPF_6$ salt in an EC/EMC solvent in a volume ratio of 3:7. The resistance value R (Ω) of the separation membrane is measured by the four-probe AC impedance technique. In order to reduce measurement errors at the electrode/separation membrane interface, many measurements are preferably performed by adding more separation membrane layers. Next, based on measurement values for multiple layers, the ion resistance value Rs (Ω) of the separation membrane saturated with the electrolyte solution is calculated by the following Equation (1).

$$Rs = \rho sl/A \hspace{3cm} (1)$$

Note that ρs denotes the ion resistivity of the separation membrane in Ω-cm, A denotes the area of the electrode in $cm^2$, and 1 denotes the thickness of the separation membrane in cm. The ratio ρs/A denotes a slope calculated for a change in the membrane resistance value of the microporous membrane, the slope being given by the following Equation (2).

$$slope = \rho s/A = \Delta R/\Delta \delta \hspace{2.5cm} (2)$$

Note that ΔR and Δδ are defined in FIG. 1. The calculation of the slope in FIG. 1 is used for evaluation of the membrane resistance value of the microporous membrane by using a multilayer measurement technique

The ion resistance value of the microporous membrane is measured by using the four-probe AC impedance technique. As for a cell used for measuring the resistance value, leads from the upper probe and lower probe of the cell each include two wires, one for sensing current and the other for sensing voltage. The electrolyte solution used for all resistance measurements contains 1.0 M of $LiPF_6$ salt in an EC/EMC solvent in a volume ratio of 3:7. The microporous membrane sample is placed on the lower electrode. The microporous membrane preferably covers the lower electrode completely and is preferably fully wetted by the electrolyte solution. Next, the second electrode is gently placed on the upper surface of the lower electrode, and the impedance value is measured. The impedance value is measured by an impedance meter with a potentiostat. In order to reduce measurement errors, more microporous layers are added, and the cumulative resistance value is measured. By placing on the lower probe a Teflon (registered trademark) spacer having a recessed center, the resistance value of only the electrolyte solution can be measured. Next, the electrolyte solution is added to fill the recessed center, and then the upper probe is placed on the spacer.

<<Example 1>>

[Production of Microporous Layer]

As the resin for the microporous layer (A), 100 weight% of a high-molecular-weight polypropylene resin [MFR (230°C) = 0.25 g/10 min, density = 0.91 $g/cm^3$] was melted by using a 2.5-inch extruder and was supplied to both outer layers of a two-material, three-layer coextrusion T-die by using a gear pump. Further, as the resin for the microporous layer (B), a high-molecular-weight polypropylene resin [MFR (230°C) = 0.44 g/10 min, density = 0.91 $g/cm^3$] was melted by using a 2.5-inch extruder and was supplied to the inner layer of the aforementioned two-material, three-layer coextrusion T-die by using a gear pump. A precursor sheet having a B/A/B layer structure with a thickness of approximately 14 μm was acquired by setting the temperature of the T-die to 240°C, extruding the melted polymer from the T-die, and then winding the extruded resin onto a roll while cooling the resin with blown air. The lip width of the T-die in the TD was set to 500 mm, and the distance between the lips (the lip clearance) of the T-die was set to 2.4 mm; and extrusion was performed under an extrusion rate condition of 6 kg/h.

Subsequently, the acquired precursor was introduced into a dryer, and an annealing treatment was performed at 150°C for 180 minutes. Subsequently, a separator substrate having a three-layer structure comprising B/A/B layers was acquired by performing 11% cold stretching on the annealed precursor in the MD at room temperature, introducing the stretched membrane into an oven at 140°C without causing contraction, performing hot stretching in the MD up to 180% assuming the dimension before stretching to be 100%, and then performing 30% relaxation in the MD. The structure, physical properties, and battery performance evaluation results of the acquired separator substrate are described in Table 1.

<<Examples 2 to 19, Comparative Examples 1 to 4>>

A microporous membrane was acquired in accordance with the same method as that in Example 1, except that the raw materials and the stacking order were changed as described in Tables 1 and 2 and that the annealing temperature, cold stretching ratio, and the conditions for hot stretching and thermal relaxation were adjusted; and the acquired separator was evaluated.

In Example 6, as the resin for the microporous layer (B), a resin material was acquired by mixing 92 weight% of a high-molecular-weight polypropylene resin [MFR (230°C) = 0.51 g/10 min, density = 0.91 g/cm$^3$] and 8 weight% of a styrene-ethylene-propylene-styrene block copolymer (referred to as "SEPS" in the table) by dry blending. The acquired resin material was melted by a 2.5-inch extruder and was supplied to the inner layer of a two-material, three-layer coextrusion T-die by using a gear pump. Further, as the resin for the microporous layer (A), a high-molecular-weight polypropylene resin [MFR (230°C) = 0.44 g/10 min, density = 0.91 g/cm$^3$] was melted by the 2.5-inch extruder and was supplied to both outer layers of the aforementioned two-material, three-layer coextrusion T-die by using a gear pump. A precursor sheet having an A/B/A layer structure with a thickness of approximately 14 μm was acquired by setting the temperature of the T-die to 240°C, extruding the melted polymer from the T-die, and then winding the extruded resin onto a roll while cooling the resin with blown air. The lip width of the T-die in the TD was set to 500 mm, and the distance between the lips (the lip clearance) of the T-die was set to 2.4 mm; and extrusion was performed under an extrusion rate condition of 6 kg/h. Next, a separator substrate having a three-layer structure comprising A/B/A layers was acquired by performing an annealing treatment, cold stretching, hot stretching, and thermal relaxation in accordance with the same method as that in Example 1.

In Comparative Example 3, an excellent precursor sheet was not acquired due to occurrence of interfacial turbulence in the A layer/B layer/A layer structure during coextrusion membrane formation. In Comparative Example 4, as the resin for the microporous layer (B), 100 weight% of a polyethylene resin [MFR (230°C) = 1.5 g/10 min, density = 0.96 g/cm$^3$] was melted by a 2.5-inch extruder and was supplied to a single-layer T-die by using a gear pump. A precursor sheet of the microporous layer (B) with a thickness of approximately 5 μm was acquired by setting the temperature of the T-die to 210°C, extruding the melted polymer from the T-die, and then winding the extruded resin onto a roll while cooling the resin with blown air. Next, a precursor sheet having a three-layer structure being a microporous layer (A)/microporous layer (B)/microporous layer (A) structure was acquired by performing a lamination treatment at 120°C. Next, the acquired precursor was introduced into a dryer, and an annealing treatment was performed at 120°C for 180 minutes. Subsequently, a separator substrate having a three-layer structure comprising A/B/A layers was acquired by performing 10% cold stretching on the annealed precursor in the MD at room temperature, introducing the stretched membrane into an oven at 125°C without causing contraction, performing hot stretching in the MD up to 180% assuming the dimension before stretching to be 100%, and then performing 30% relaxation in the MD.

[Table 1]

Table 1

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Separator substrate structure | | B/A/B | A/B/A | B/A/B | B/A/B | A/B/A | A/B/A | A/B/A | A/B/A | A/B/A | A/B/A | B/A/B |
| Microporous layer (A) | Composition | PP | PP | PP | PP | PP | PP | PP | PP | PP | PP | PP |
| | Melt tension ($Mt_A$) (mN, 240°C) | 35.9 | 30.6 | 30.6 | 35.9 | 25.2 | 25.2 | 25.2 | 30.6 | 30.6 | 14.3 | 30.6 |
| | MFR (g/10 min, 230°C) | 0.25 | 0.31 | 0.31 | 0.25 | 0.44 | 0.44 | 0.44 | 0.31 | 0.31 | 0.91 | 0.31 |
| | Mw of PP | 910,000 | 940,000 | 940,000 | 910,000 | 850,000 | 850,000 | 850,000 | 940,000 | 940,000 | 690,000 | 940,000 |
| | MWD of PP | 5.5 | 13 | 13 | 5.5 | 4.9 | 4.9 | 4.9 | 13 | 13 | 5.4 | 13 |
| | Thickness (µm) | 3.9 | 4.0 | 4.0 | 4.1 | 4.1 | 4.2 | 4.2 | 4.2 | 4.4 | 4.2 | 4.0 |
| | Area-average major axis pore diameter (nm) | 286 | 282 | 258 | 342 | 288 | 177 | 179 | 151 | 154 | 181 | 171 |
| Microporous layer (B) | Composition | PP | PP | PP | PP | PP | PP+ 8% SEPS | PP | PP | PP | PP | PP |
| | Melt tension ($Mt_B$) (mN, 240°C) | 25.2 | 25.2 | 14.3 | 21.4 | 21.4 | 18.3 | 21.4 | 21.4 | 25.2 | 8.5 | 21.4 |
| | MFR (g/10 min, 230°C) | 0.44 | 0.44 | 0.91 | 0.51 | 0.51 | 0.60 | 0.51 | 0.51 | 0.44 | 1.60 | 0.51 |
| | Mw of PP | 850,000 | 850,000 | 690,000 | 810,000 | 810,000 | 810,000 | 810,000 | 810,000 | 850,000 | 570,000 | 810,000 |
| | MWD of PP | 4.9 | 4.9 | 5.4 | 4.4 | 4.4 | 4.4 | 4.4 | 4.4 | 4.9 | 6.2 | 4.4 |
| | Thickness (µm) | 3.9 | 4.0 | 4.0 | 4.1 | 4.1 | 4.2 | 4.3 | 4.2 | 4.4 | 4.2 | 4.0 |
| | Area-average major axis pore diameter (nm) | 311 | 313 | 277 | 407 | 412 | 263 | 224 | 226 | 227 | 227 | 247 |
| $Mt_A$/$Mt_B$ | | 1.42 | 1.21 | 2.14 | 1.68 | 1.18 | 1.38 | 1.18 | 1.43 | 1.21 | 1.68 | 1.43 |
| Area-average major axis pore diameter ratio (B layer/A layer) | | 1.09 | 1.11 | 1.08 | 1.19 | 1.43 | 1.49 | 1.25 | 1.50 | 1.47 | 1.25 | 1.44 |

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Separator | Thickness ($\mu$m) | 11.7 | 11.9 | 11.9 | 12.3 | 12.2 | 12.5 | 12.7 | 12.6 | 13.3 | 12.6 | 12.1 |
| | Porosity | 51% | 50% | 51% | 53% | 51% | 57% | 55% | 54% | 51% | 54% | 49% |
| | TD thermal contraction rate | 0.2% | 0.2% | 0.2% | 0.1% | 0.2% | 0.2% | 0.1% | 0.2% | 0.2% | 0.2% | 0.2% |
| | Puncture strength (gf) | 278 | 311 | 274 | 257 | 275 | 260 | 257 | 293 | 325 | 239 | 233 |
| | Puncture strength (gf/14 $\mu$) | 333 | 366 | 322 | 292 | 292 | 291 | 283 | 326 | 342 | 266 | 270 |
| | Air permeability (sec) | 125 | 125 | 127 | 118 | 119 | 190 | 172 | 177 | 177 | 170 | 159 |
| | Air permeability (sec/14 $\mu$) | 150 | 147 | 149 | 134 | 137 | 213 | 190 | 197 | 186 | 189 | 184 |
| | Air permeability after high-temperature treatment (sec) | 126 | 127 | 128 | 118 | 120 | 196 | 173 | 178 | 178 | 171 | 160 |
| | MD tensile strength (kgf/cm$^2$) | 2217 | 2622 | 2403 | 2056 | 2155 | 2080 | 2051 | 2325 | 2444 | 2011 | 2010 |
| Performance | Dendrite short circuiting evaluation (pass%) | 80% | 80% | 80% | 80% | 80% | 80% | 80% | 90% | 90% | 90% | 90% |
| | Dielectric strength (kV) | 0.92 | 0.95 | 1.02 | 0.89 | 0.97 | 1.17 | 1.23 | 1.26 | 1.28 | 1.19 | 1.19 |
| | Dielectric strength (kV/14 $\mu$) | 1.1 | 1.12 | 1.2 | 1.01 | 1.11 | 1.31 | 1.36 | 1.40 | 1.35 | 1.32 | 1.38 |
| | Membrane resistance ($\Omega \cdot$cm$^2$) | 0.65 | 0.64 | 0.68 | 0.64 | 0.63 | 0.96 | 0.91 | 0.91 | 0.90 | 0.92 | 0.90 |
| Manufacturing method | Annealing temperature (°C) | 150 | 150 | 150 | 150 | 150 | 150 | 150 | 150 | 150 | 150 | 150 |
| | Cold stretching ratio (%) | 11 | 11 | 11 | 11 | 11 | 18 | 30 | 30 | 30 | 30 | 30 |
| | Hot stretching temperature (°C) | 140 | 140 | 140 | 140 | 140 | 140 | 140 | 140 | 140 | 140 | 140 |
| | Hot stretching ratio (%) | 180 | 180 | 180 | 180 | 180 | 180 | 180 | 180 | 180 | 180 | 180 |
| | Thermal relaxation ratio (%) | 30 | 30 | 30 | 30 | 30 | 30 | 30 | 30 | 30 | 30 | 30 |

EP 4 683 088 A1

[Table 2]

[Table 2]

Table 2

| | | Example 12 | Example 13 | Example 14 | Example 15 | Example 16 | Example 17 | Example 18 | Example 19 | Comparative Example 1 | Comparative Example 2 | Comparative Example 3 | Comparative Example 4 |
|---|---|---|---|---|---|---|---|---|---|---|---|---|---|
| Separator substrate structure | | B/A/B | B/A/B | B/A/B | B/A/B | B/A/B | B/A/B | A/B/A | A/B/A | A/B/A | B/A/B | A/B/A | A/B/A |
| Microporous layer (A) | Composition | PP | PP | PP | PP | PP | PP | PP | PP | PP | PP | PP | PP |
| | Melt tension (MtA) (mN, 240°C) | 35.9 | 30.6 | 30.6 | 35.9 | 35.9 | 35.9 | 35.9 | 30.6 | 25.2 | 35.9 | 35.9 | 14.3 |
| | MFR (g/10 min, 23 °C) | 0.25 | 0.31 | 0.31 | 0.25 | 0.25 | 0.25 | 0.25 | 0.31 | 0.44 | 0.25 | 0.25 | 0.91 |
| | Mw of PP | 910,000 | 940,000 | 940,000 | 910,000 | 910,000 | 910,000 | 910,000 | 940,000 | 850,000 | 910,000 | 910,000 | 690,000 |
| | MWD of PP | 5.5 | 13 | 13 | 5.5 | 5.5 | 5.5 | 5.5 | 13 | 4.9 | 5.5 | 5.5 | 5.4 |
| | Thickness (μm) | 4.1 | 4.0 | 4.0 | 4.1 | 4.1 | 4.1 | 3.7 | 4.2 | 4.2 | 4.6 | - | 4.2 |
| | Area-average major axis pore diameter (nm) | 176 | 199 | 192 | 190 | 210 | 112 | 158 | 155 | 225 | 94 | - | 270 |

EP 4 683 088 A1

EP 4 683 088 A1

| | | Example 12 | Example 13 | Example 14 | Example 15 | Example 16 | Example 17 | Example 18 | Example 19 | Comparative Example 1 | Comparative Example 2 | Comparative Example 3 | Comparative Example 4 |
|---|---|---|---|---|---|---|---|---|---|---|---|---|---|
| Microporous layer (B) | Composition | PP | PP | PP | PP | PP | PP | PP | PP | PP | PP | PP | PE |
| | Melt tension (MtB) (mN, 240°C) | 25.2 | 14.3 | 14.3 | 21.4 | 14.3 | 21.4 | 14.3 | 8.5 | 25.2 | 8.5 | 6.0 | - |
| | MFR (g/10 min, 230°C) | 0.44 | 0.91 | 0.91 | 0.51 | 0.91 | 0.51 | 0.91 | 1.60 | 0.44 | 1.60 | 3.40 | 1.50 |
| | Mw of PP | 850,000 | 690,000 | 690,000 | 810,000 | 690,000 | 810,000 | 690,000 | 570,000 | 850,000 | 570,000 | 480,000 | - |
| | MWD of PP | 4.9 | 5.4 | 5.4 | 4.4 | 5.4 | 4.4 | 5.4 | 6.2 | 4.9 | 6.2 | 6.6 | - |
| | Thickness ($\mu$m) | 4.1 | 4.0 | 4.0 | 4.1 | 4.1 | 4.1 | 3.7 | 4.2 | 4.2 | 4.6 | - | 4.4 |
| | Area-average major axis pore diameter (nm) | 269 | 243 | 205 | 224 | 279 | 174 | 178 | 198 | 230 | 128 | - | 557 |
| | $Mt_A/Mt_B$ | 1.42 | 2.14 | 2.14 | 1.68 | 2.51 | 1.68 | 2.51 | 3.60 | 1.00 | 4.22 | 5.98 | - |
| | Area-average major axis pore diameter ratio (B layer/A layer) | 1.53 | 1.22 | 1.07 | 1.18 | 1.33 | 1.55 | 1.13 | 1.28 | 1.02 | 1.36 | - | 2.06 |
| Separator | Thickness ($\mu$m) | 12.3 | 11.9 | 11.9 | 12.3 | 12.3 | 12.3 | 11 | 12.7 | 12.6 | 13.9 | Unable to produce separator | 12.8 |
| | Porosity | 49% | 51% | 50% | 51% | 53% | 51% | 39% | 53% | 52.0% | 37% | | 55% |
| | TD thermal contraction rate | 0.2% | 0.2% | 0.2% | 0.2% | 0.2% | 0.2% | 0.2% | 0.2% | 0.2% | 0.2% | | 0.3% |

(continued)

| | | Example 12 | Example 13 | Example 14 | Example 15 | Example 16 | Example 17 | Example 18 | Example 19 | Comparative Example 1 | Comparative Example 2 | Comparative Example 3 | Comparative Example 4 |
|---|---|---|---|---|---|---|---|---|---|---|---|---|---|
| | Puncture strength (gf) | 238 | 298 | 230 | 194 | 281 | 316 | 277 | 231 | 225 | 240 | | 198 |
| | Puncture strength (gf/14 $\mu$) | 271 | 350 | 270 | 221 | 320 | 360 | 353 | 255 | 250 | 242 | | 217 |
| | Air permeability (sec) | 148 | 177 | 233 | 255 | 179 | 218 | 323 | 220 | 185 | 320 | | 178 |
| | Air permeability (sec/14 $\mu$) | 168 | 208 | 274 | 290 | 204 | 248 | 411 | 243 | 206 | 322 | | 195 |
| | Air permeability after high-temperature treatment (sec) | 149 | 178 | 234 | 256 | 180 | 219 | 324 | 221 | 186 | 321 | | >1000 |
| | MD tensile strength (kgf/cm$^2$) | 2005 | 2753 | 2027 | 1750 | 2350 | 2894 | 3085 | 1819 | 1786 | 1931 | | 1805 |
| Performance | Dendrite short circuiting evaluation (pass%) | 90% | 80% | 80% | 90% | 65% | 85% | 60% | 60% | 40% | 60% | | 60% |
| | Dielectric strength (kV) | 1.17 | 1.16 | 1.16 | 1.22 | 1.12 | 1.22 | 1.14 | 1.20 | 1.18 | 1.45 | | 1.02 |
| | Dielectric strength (kV/14$\mu$) | 1.33 | 1.36 | 1.37 | 1.39 | 1.28 | 1.39 | 1.45 | 1.42 | 1.31 | 1.46 | | 1.12 |
| | Membrane resistance ($\Omega \cdot$cm$^2$) | 0.87 | 1.01 | 1.01 | 1.39 | 0.90 | 1.40 | 1.81 | 1.60 | 0.96 | 1.80 | | 0.91 |

(continued)

| | | Example 12 | Example 13 | Example 14 | Example 15 | Example 16 | Example 17 | Example 18 | Example 19 | Comparative Example 1 | Comparative Example 2 | Comparative Example 3 | Comparative Example 4 |
|---|---|---|---|---|---|---|---|---|---|---|---|---|---|
| Manufacturing method | Annealing temperature (°C) | 150 | 150 | 150 | 130 | 150 | 150 | 130 | 150 | 150 | 150 | | 120 |
| | Cold stretching ratio (%) | 30 | 25 | 25 | 25 | 25 | 45 | 18 | 30 | 30 | 40 | | 10 |
| | Hot stretching temperature (°C) | 140 | 140 | 140 | 140 | 140 | 140 | 140 | 140 | 140 | 140 | | 125 |
| | Hot stretching ratio (%) | 180 | 200 | 160 | 180 | 180 | 180 | 180 | 180 | 180 | 180 | | 180 |
| | Thermal relaxation ratio (%) | 30 | 30 | 30 | 30 | 30 | 30 | 30 | 30 | 30 | 30 | | 30 |

INDUSTRIAL APPLICABILITY

The separator for a power storage device according to the present disclosure can be suitably used as a separator for a power storage device such as a lithium-ion secondary battery.

**Claims**

1. A separator for a power storage device, the separator comprising a separator substrate comprising one or a plurality of microporous layers (A) having polypropylene as a main component and one or a plurality of microporous layers (B) having polypropylene as a main component and being stacked on at least one of the microporous layers (A),

   wherein the microporous layer (A) has a melt tension $Mt_A$ at 240°C of 10 mN or greater and 40 mN or less, a ratio $Mt_A/Mt_B$ between the melt tension $Mt_A$ of the microporous layer (A) at 240°C and a melt tension $Mt_B$ of the microporous layer (B) at 240°C is 1.05 or greater and 4.0 or less, and
   the microporous layer (A) has an area-average major axis pore diameter of 50 nm or greater and 500 nm or less.

2. The separator for a power storage device according to claim 1, wherein a ratio $Mt_A/Mt_B$ between the melt tension $Mt_A$ of the microporous layer (A) at 240°C and the melt tension $Mt_B$ of the microporous layer (B) at 240°C is 1.1 or greater and 2.2 or less.

3. The separator for a power storage device according to claim 1 or 2, wherein the separator for a power storage device has an MD tensile strength of 2000 kgf/cm$^2$ or greater and 2800 kgf/cm$^2$ or less.

4. The separator for a power storage device according to claim 1 or 2, wherein a thermal contraction rate in a width direction after performing a heat treatment on the separator substrate at 150°C for 1 hour is -1.0% or greater and 3.0% or less.

5. The separator for a power storage device according to claim 1 or 2, wherein at least one of the microporous layers (A) is adjacent to at least one of the microporous layers (B).

6. The separator for a power storage device according to claim 1 or 2, wherein the separator substrate includes the microporous layer (A) in outermost layers on both sides.

7. The separator for a power storage device according to claim 1 or 2, wherein the microporous layer (A) has a thickness of 5 $\mu$m or less, and the microporous layer (B) has a thickness of 5 $\mu$m or less.

8. The separator for a power storage device according to claim 1 or 2, wherein the separator for a power storage device has a porosity of 40% or greater and 60% or less.

9. The separator for a power storage device according to claim 1 or 2, wherein the separator for a power storage device has an air permeability of 10 sec/100 cc or greater and less than 220 sec/100 cc.

10. The separator for a power storage device according to claim 1 or 2, wherein the microporous layer (B) has an area-average major axis pore diameter of 50 nm or greater and 240 nm or less.

11. The separator for a power storage device according to claim 1 or 2, wherein the separator for a power storage device has an MD/TD tensile strength ratio of 16 or greater and 30 or less.

12. A power storage device comprising:

    a positive electrode;
    a negative electrode, and
    the separator for a power storage device according to claim 1 or 2, the separator being placed between the positive electrode and the negative electrode.

13. The power storage device according to claim 12, wherein the positive electrode contains lithium iron phosphate as a positive electrode active material.

14. A method for manufacturing a separator for a power storage device, the separator comprising a separator substrate comprising one or a plurality of microporous layers (A) having polypropylene as a main component and one or a plurality of microporous layers (B) having polypropylene as a main component, the method comprising:

a melt extrusion process in which a precursor sheet of the separator substrate is produced by (i) forming the microporous layer (A) and the microporous layer (B) by coextrusion or (ii) separately forming the microporous layer (A) and the microporous layer (B) by extrusion and then laminating the layers;
a process of performing an annealing treatment on the acquired precursor sheet within a temperature range from 135°C or higher to 160°C or lower;
a process of performing cold stretching on the precursor sheet in an MD at an elongation ratio equal to or greater than 5% and equal to or less than 20%; and
a process of performing hot stretching and thermal relaxation on the precursor sheet.

15. The method according to claim 14, wherein the hot stretching and the thermal relaxation stretch a dimension of the precursor sheet in an MD to 140% or greater and 220% or less and subsequently relax the dimension in an MD to 10% or greater and 50% or less assuming the dimension before stretching to be 100%.

# Fig. 1

## INTERNATIONAL SEARCH REPORT

| International application No. |
| --- |
| **PCT/JP2024/009786** |

### A. CLASSIFICATION OF SUBJECT MATTER

*H01M 50/417*(2021.01)i; *H01G 11/06*(2013.01)i; *H01G 11/52*(2013.01)i; *H01M 4/58*(2010.01)i; *H01M 10/052*(2010.01)i; *H01M 50/403*(2021.01)i; *H01M 50/406*(2021.01)i; *H01M 50/449*(2021.01)i; *H01M 50/457*(2021.01)i; *H01M 50/489*(2021.01)i; *H01M 50/491*(2021.01)i; *H01M 50/494*(2021.01)i

FI: H01M50/417; H01M50/489; H01M50/457; H01M10/052; H01M50/406; H01M50/403 C; H01M50/403 B; H01G11/52; H01M50/449; H01M50/494; H01M50/491; H01M4/58; H01M50/403 A; H01G11/06

According to International Patent Classification (IPC) or to both national classification and IPC

### B. FIELDS SEARCHED

Minimum documentation searched (classification system followed by classification symbols)

H01M50/417; H01G11/06; H01G11/52; H01M4/58; H01M10/052; H01M50/403; H01M50/406; H01M50/449; H01M50/457; H01M50/489; H01M50/491; H01M50/494

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2022-188201 A (CELGARD LLC) 20 December 2022 (2022-12-20) entire text, all drawings | 1-15 |
| A | JP 2018-104713 A (UBE INDUSTRIES, LTD.) 05 July 2018 (2018-07-05) entire text, all drawings | 1-15 |
| A | JP 2022-70897 A (ASAHI KASEI KABUSHIKI KAISHA) 13 May 2022 (2022-05-13) entire text, all drawings | 1-15 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **29 May 2024** | **11 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/009786**

| Patent document cited in search report | | | Publication date (day/month/year) | Patent family member(s) | | | Publication date (day/month/year) |
|---|---|---|---|---|---|---|---|
| JP | 2022-188201 | A | 20 December 2022 | US | 2017/0084898 | A1 | |
| JP | 2018-104713 | A | 05 July 2018 | JP | 2017-141428 | A | |
| JP | 2022-70897 | A | 13 May 2022 | US | 2022/0294080 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018089748 A

- WO 2020196120 A